# EUROPEAN PATENT APPLICATION

(11) **EP 4 559 734 A1**
(43) Date of publication of application: **28.05.2025**
(21) Application number: 23854285.6
(22) Date of filing: 08.08.2023
(51) Int. Cl.: B60L 58/10, H02J 7/00, H02J 7/34, H01M 10/42

(54) **BATTERY MANAGEMENT METHOD, APPARATUS, AND SYSTEM**

(30) Priority: 17.08.2022 CN 202210988834
(71) Applicant: Shenzhen Yinwang Intelligent Technologies Co., Ltd., Shenzhen, Guangdong 518129 (CN)
(72) Inventor: XU, Pinghong, Shenzhen, Guangdong 518129 (CN); YANG, Changqing, Shenzhen, Guangdong 518129 (CN)
(74) Representative: Körber, Martin Hans
(86) International application number: PCT/CN2023/111762
(87) International publication number: WO 2024/037382

(57) **Abstract**

A battery management method, apparatus, and system are provided. The method includes: A primary-control board (100) receives first cell status information from a first secondary-control board (210), where the first cell status information includes status information of a first cell managed by the first secondary-control board (210) or status information of a part or all of cells in a first cell group managed by the first secondary-control board (210). The primary-control board (100) sends control information to the first secondary-control board (210) based on the first cell status information, where the control information is used by the first secondary-control board (210) to manage the first cell or the first cell group.

## Description

### CROSS-REFERENCE TO RELATED APPLICATIONS

This application claims priority to Chinese Patent Application No. 202210988834.2, filed with the China National Intellectual Property Administration on August 17, 2022 and entitled "BATTERY MANAGEMENT METHOD, APPARATUS, AND SYSTEM", which is incorporated herein by reference in its entirety.

### TECHNICAL FIELD

This application relates to the field of new energy, and in particular, to a battery management method, apparatus, and system.

### BACKGROUND

With development of new energy technologies, electrification of vehicles is increasingly popular. Battery management of new energy vehicles is particularly important for effectively preventing thermal runaway of batteries of the new energy vehicles.

Currently, a battery management system, which manages safety and lifespan of a battery, has a low detection rate and low accuracy of providing thermal runaway warning for the battery based on collected signals such as a voltage, a current, and a temperature. There is often a long transmission delay, and accurate warnings and alarms cannot be provided for thermal runaway of one or more cells of the battery. In addition, devices inside an existing battery management system are generally connected through complex harnesses to implement signal collection and transmission, which not only limits flexibility of the battery management system, but also may cause a safety risk due to aging of harnesses, falling off or loosening of inserts, and the like.

In conclusion, an efficient and sensitive battery management method is urgently needed currently.

### SUMMARY

This application provides a battery management method, apparatus, and system, to provide an efficient and sensitive battery system management apparatus and method.

According to a first aspect, an embodiment of this application provides a battery management method. The method may be applied to a primary-control board, or may be applied to a component (for example, a processor, a chip, or a chip system) in a primary-control board. The method includes:
A primary-control board receives first cell status information from a first secondary-control board, where the first cell status information includes status information of a first cell managed by the first secondary-control board or status information of a part or all of cells in a first cell group managed by the first secondary-control board. The primary-control board sends control information to the first secondary-control board based on the first cell status information, where the control information is used by the first secondary-control board to manage the first cell or the first cell group.

According to the foregoing method, in this embodiment of this application, a cell-level secondary-control board is used to collect a cell status signal, and send the signal to a primary-control board, to implement small-granularity signal collection at a cell level or a cell group level. This facilitates more accurate monitoring of a status of a cell or a cell group, and management and control.

In a possible implementation, the first cell status information includes one or more of the following: internal cell status information of the first cell or the first cell group collected by using a first sensor and external cell status information of the first cell or the first cell group collected by using a second sensor.

According to the foregoing method, this embodiment of this application provides a new battery management system architecture. The battery management system architecture includes a first sensor configured to collect internal cell status information and a second sensor configured to collect external cell status information. In this embodiment of this application, each secondary-control board is configured to manage one cell or cell group. Therefore, compared with an existing architecture in which a secondary-control board manages a battery module and only external status information of the battery module can be obtained, cell status information collected based on the first sensor and the second sensor in this embodiment of this application has a smaller granularity and higher sensitivity and accuracy. In addition, the first sensor provided in this embodiment of this application can further obtain internal cell status information of a battery or a battery pack. Therefore, compared with the existing solution in which only the external status information of the battery module can be obtained, the cell status information obtained in this embodiment of this application is more abundant, so that more accurate monitoring and management of a battery system can be implemented, and a service life and safety performance can be improved.

In a possible implementation, the internal cell status information includes one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group. The external cell status information includes one or more of the following: an external temperature, a voltage, a current, a stress, a gas type, gas pressure, a gas concentration, an electrolyte, smoke sensing, and an internal resistance of the cell or the cell group.

According to the foregoing method, this embodiment of this application provides multidimensional internal cell status information and external cell status information.

In a possible implementation, the method further includes:
The primary-control board sends a switch instruction to an electronic switch to control turn-off or turn-on of the electronic switch, where the electronic switch is configured to control a battery system managed by a battery management system, and the electronic switch includes one or more of the following: a main positive relay, a main negative relay, a main positive metal-oxide-semiconductor field-effect transistor, and a main negative metal-oxide-semiconductor field-effect transistor.

There may be one or more electronic switches in this embodiment of this application.

According to the foregoing method, this embodiment of this application provides a battery management system architecture that is provided with an electronic switch, so that a primary-control board in a battery management system can connect or disconnect a high-voltage circuit loop in a battery system through turn-on or turn-off of the electronic switch.

In a possible implementation, the method further includes:
The primary-control board receives alarm information sent by the first secondary-control board, where the alarm information indicates that the first cell or one or more cells in the first cell group are abnormal. The primary-control board sends the control information to the first secondary-control board based on the alarm information.

According to the foregoing method, this embodiment of this application provides a manner of triggering a primary-control board to send control information to a first secondary-control board. For example, the first secondary-control board may process and analyze cell status information after obtaining the cell status information, and send alarm information to the primary-control board when determining that the cell status information is abnormal, to effectively reduce processing and analysis overheads of the primary-control board.

In a possible implementation, the method further includes:
The primary-control board triggers an alarm when it is determined that received cell status information or cell status information obtained through processing satisfies an alarm condition, where the alarm condition indicates that one or more pieces of cell status information received by the primary-control board or obtained by the primary-control board through processing are greater than or less than a specified threshold corresponding to the cell status information.

In this implementation, in addition to indicating that one or more pieces of cell status information received by the primary-control board or obtained by the primary-control board through processing are greater than or less than a specified threshold corresponding to the cell status information, the alarm condition may indicate another agreed condition. For example, the alarm condition may further indicate that a quantity of cell status information received by the primary-control board is less than a specified threshold quantity. For another example, the alarm condition may further indicate that the primary-control board does not receive cell status information within threshold time, or the like. This is not limited herein.

In a possible implementation, the method further includes:
The primary-control board determines cell primary-control information based on the received cell status information. The primary-control board sends the cell primary-control information to a vehicle control unit, so that the vehicle control unit controls output of battery prompt information based on the cell primary-control information, where the battery prompt information indicates a status of the battery system managed by the battery management system.

In this implementation, the battery prompt information is output in one or more of the following manners: sound signal, optical signal, or electrical signal.

The cell primary-control information includes first information and/or second information of the battery system managed by the battery management system, and the second information is obtained based on the first information.

The first information includes one or more pieces of the following information of the battery system:
internal cell status information, external cell status information, module status information, and sensing status information.

The second information includes one or more pieces of the following information of the battery system:
a state of charge, a state of health, a state of safety, a battery level indication, power, a highest temperature of a single cell, a lowest temperature of a single cell, a highest voltage of a single cell, a lowest voltage of a single cell, a total current, an insulation status, alarm information, fault information, and an electronic switch status.

The battery prompt information includes the first information and/or third information, and the third information is obtained based on the first information.

The third information includes one or more pieces of information in the second information, and/or includes one or more pieces of the following information of the battery system:
dynamic energy consumption, estimated remaining drivable range, estimated remaining drivable time, and estimated remaining charging time.

In this implementation, the battery prompt information may be one or more of the following: a numerical value, a ratio, a maximum value, a minimum value, and a difference, or may be in another agreed representation form.

According to the foregoing method, in this embodiment of this application, cell status information is processed into battery prompt information, so that a user can learn statuses of a battery and a vehicle more intuitively.

According to a second aspect, an embodiment of this application provides a battery management method. The method may be applied to a secondary-control board, or may be applied to a component (for example, a processor, a chip, or a chip system) in a secondary-control board. The method includes:
A first secondary-control board obtains first cell status information, where the first cell status information includes status information of a first cell managed by the first secondary-control board or status information of a part or all of cells in a first cell group managed by the first secondary-control board. The first secondary-control board controls a first secondary node to send the first cell status information to a first primary node. The first secondary node receives control information from the first primary node. The first secondary-control board is configured to manage the first cell or one or more cells in the first cell group based on the control information.

According to the foregoing method, in this embodiment of this application, a cell-level secondary-control board is used to collect a cell status signal, and send the signal to a primary-control board, to implement small-granularity signal collection at a cell level or a cell group level. This facilitates more accurate monitoring of a status of a cell or a cell group, and management and control.

In a possible implementation, the first cell status information includes one or more of the following: internal cell status information of the first cell or the first cell group collected by using a first sensor and external cell status information of the first cell or the first cell group collected by using a second sensor.

According to the foregoing method, this embodiment of this application provides a new battery management system architecture. The battery management system architecture includes a first sensor configured to collect internal cell status information and a second sensor configured to collect external cell status information. In this embodiment of this application, each secondary-control board is configured to manage one cell or cell group. Therefore, compared with an existing architecture in which a secondary-control board manages a battery module and only external status information of the battery module can be obtained, cell status information collected based on the first sensor and the second sensor in this embodiment of this application has a smaller granularity and higher sensitivity and accuracy. In addition, the first sensor provided in this embodiment of this application can further obtain internal cell status information of a battery or a battery pack. Therefore, compared with the existing solution in which only the external status information of the battery module can be obtained, the cell status information obtained in this embodiment of this application is more abundant, so that more accurate monitoring and management of a battery system can be implemented, and a service life and safety performance can be improved.

In a possible implementation, the internal cell status information includes one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group. The external cell status information includes one or more of the following: an external temperature, a voltage, a current, a stress, a gas type, gas pressure, a gas concentration, an electrolyte, smoke sensing, and an internal resistance of the cell or the cell group.

According to the foregoing method, this embodiment of this application provides multidimensional internal cell status information and external cell status information.

In a possible implementation, the method further includes:
The first secondary-control board reports alarm information to the primary-control board when it is determined that received cell status information or cell status information obtained through processing satisfies an alarm condition, where the alarm information indicates that the first cell or one or more cells in the first cell group are abnormal.

According to a third aspect, an embodiment of this application provides a battery management apparatus. The apparatus may be a primary-control board, or may be a chip, an integrated circuit, or a chip system used in a primary-control board. The battery management apparatus has a function of implementing the first aspect or each possible implementation according to the first aspect. The function may be implemented by hardware, or may be implemented by hardware executing corresponding software. The hardware or the software includes one or more modules corresponding to the function.

In a possible implementation, the battery management apparatus includes a primary-control unit and a primary node.

The primary node is configured to receive first cell status information from a first secondary node. The first cell status information includes status information of a first cell managed by a first secondary-control board corresponding to the first secondary node or status information of a part or all of cells in a first cell group managed by the first secondary-control board corresponding to the first secondary node.

The primary-control unit is configured to control the primary node to send control information to the first secondary node. The control information is used by the first secondary-control board to manage the first cell or the first cell group.

In a possible implementation, the primary-control unit is configured to control, based on the first cell status information, the primary node to send the control information to the first secondary node.

In a possible implementation, the primary-control unit is further configured to:
receive second cell status information from a second secondary node, where the second cell status information includes status information of a second cell managed by a second secondary-control board corresponding to the second secondary node or status information of a part or all of cells in a second cell group managed by the first secondary-control board; and control, based on the second cell status information, the primary node to send control information to the first secondary node.

According to a fourth aspect, an embodiment of this application provides a battery management apparatus. The apparatus may be a secondary-control board, or may be a chip, an integrated circuit, or a chip system used in a secondary-control board. The apparatus has a function of implementing the second aspect or each possible implementation according to the second aspect. The function may be implemented by hardware, or may be implemented by hardware executing corresponding software. The hardware or the software includes one or more modules corresponding to the function.

In a possible implementation, the battery management apparatus includes a first secondary-control unit and a first secondary node.

The first secondary-control unit obtains first cell status information. The first cell status information includes status information of a first cell managed by a first secondary-control board or status information of a part or all of cells in a first cell group managed by the first secondary-control board.

The first secondary-control unit controls the first secondary node to send the first cell status information to a first primary node.

The first secondary node receives control information from the first primary node.

The first secondary-control unit is configured to manage the first cell or one or more cells in the first cell group based on the control information.

In a possible implementation, the first cell status information comes from a first sensor and/or a second sensor.

The first sensor is located inside the first cell or the first cell group, and the second sensor is located outside the first cell or the first cell group.

According to a fifth aspect, an embodiment of this application provides a server apparatus. The apparatus may be a cloud server, or may be a chip, an integrated circuit, or a chip system used in a cloud server.

In a possible implementation, the server apparatus includes a communication unit and a processing unit.

The communication unit is configured to receive a plurality of pieces of cell primary-control information from a plurality of terminals. The cell primary-control information corresponds to a plurality of cells or a plurality of cell groups of the terminal.

The processing unit is configured to generate a battery control strategy based on one or more of the plurality of pieces of cell primary-control information.

The communication unit is configured to send the battery control strategy to a first terminal in the plurality of terminals.

According to a sixth aspect, an embodiment of this application provides a control device. The control device includes a communication unit and a processing unit.

The communication unit is configured to receive a battery control strategy sent by a server apparatus.

The processing unit is configured to complete a strategy update according to the battery control strategy.

In a possible implementation, the control device includes one or more of the following: a secondary-control board, a primary-control board, or a relay device. The relay device includes one or more of the following: a vehicle control unit (vehicle control unit, VCU), a wireless gateway T-box (Telematics BOX), a wireless access network device (for example, a 4G base station, a 5G base station, or a future 6G base station), and a roadside unit (roadside unit, RSU).

In this implementation, when the control device is a first secondary-control board and/or a primary-control board, the control device may communicate with a server apparatus through a direct link, or communicate with the server apparatus through a relay device.

According to a seventh aspect, an embodiment of this application provides a battery management apparatus, including at least one processor and an interface circuit. The interface circuit is configured to receive a signal from an apparatus other than the battery management apparatus and transmit the signal to the processor, or send a signal from the processor to an apparatus other than the battery management apparatus. The processor is configured to implement the method described in the first aspect or each possible implementation according to the first aspect by using a logic circuit or executing code instructions. Alternatively, the processor is configured to implement the method described in the second aspect or each possible implementation according to the second aspect or the method described in the second aspect by using a logic circuit or executing code instructions.

Optionally, the battery management apparatus further includes a memory. Alternatively, the memory may be located outside the apparatus. The memory is configured to store a program or code instructions for execution by the at least one processor.

According to an eighth aspect, an embodiment of this application further provides a battery management system, including a primary-control board configured to perform the first aspect or any possible implementation method according to the first aspect, and a first secondary-control board configured to perform the second aspect or any possible implementation method according to the second aspect. In addition, the battery management system may further include another secondary-control board, for example, a second secondary-control board.

In a possible implementation, the battery management system includes a primary-control board and a first secondary-control board.

The first secondary-control board is configured to manage a first cell or a first cell group, and is configured to send first cell status information to the primary-control board. The first cell status information includes status information of the first cell or status information of a part or all of cells in the first cell group.

The primary-control board is configured to send first control information to the first secondary-control board. The first control information is used by the first secondary-control board to manage the first cell or the first cell group.

In a possible implementation, the battery management system further includes a second secondary-control board.

The second secondary-control board is configured to manage a second cell or a second cell group, and is configured to send second cell status information to the primary-control board. The second cell status information includes status information of the second cell or status information of a part or all of cells in the second cell group.

In a possible implementation, the first cell status information comes from a first sensor and/or a second sensor.

The first sensor is configured to collect internal cell status information of the first cell or the first cell group and report the internal cell status information to the first secondary-control board.

The second sensor is configured to collect external cell status information of the first cell or the first cell group and report the external cell status information to the first secondary-control board.

In a possible implementation, the internal cell status information includes one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group.

The external status information includes one or more of the following: an external temperature, a voltage, a current, a stress, a gas type, gas pressure, a gas concentration, an electrolyte, smoke sensing, and an internal resistance of the cell or the cell group.

In a possible implementation, the first secondary-control board is in an electrical connection to the first sensor and/or the second sensor.

In a possible implementation, the first secondary-control board is in an electrical connection to the first cell or the first cell group.

In a possible implementation, the electrical connection includes one or more of the following: a wire harness connection, a flexible printed circuit FPC connection, a printed circuit board PCB connection, a pin (PIN) connection, an insert connection, a solder connection, and a connector connection.

In a possible implementation, the battery management system further includes a balance module located on the first secondary-control board.

The balance module is configured to: when a balance condition is satisfied, perform a balance operation on at least one cell or cell group managed by the first secondary-control board.

The balance condition includes one or more of the following:
the balance module receives a balance instruction sent by a secondary-control unit located on the first secondary-control board; the balance module receives a balance instruction from the primary-control board through a secondary node located on the first secondary-control board; and the balance module determines, based on the obtained first cell status information, that a balance operation needs to be performed.

In a possible implementation, the primary-control board is further configured to send a switch instruction to an electronic switch to control turn-off or turn-on of the electronic switch, and the electronic switch is configured to control a battery system managed by the battery management system.

The electronic switch includes one or more of the following: a main positive relay, a main negative relay, a main positive metal-oxide-semiconductor field-effect transistor, and a main negative metal-oxide-semiconductor field-effect transistor.

In a possible implementation, the first secondary-control board is further configured to report alarm information to the primary-control board by using a first alarm module located on the first secondary-control board. The alarm information indicates that the first cell or one or more cells in the first cell group are abnormal.

In a possible implementation, the primary-control board is further configured to trigger an alarm by using a second alarm module located on the primary-control board when it is determined that received cell status information or cell status information obtained through processing satisfies an alarm condition.

In a possible implementation, the primary-control board is further configured to send cell primary-control information to a vehicle control unit, so that the vehicle control unit controls output of battery prompt information based on the cell primary-control information. The battery prompt information indicates a status of the battery system managed by the battery management system.

In a possible implementation, the battery prompt information is output in one or more of the following manners: sound signal, optical signal, or electrical signal.

In a possible implementation, the cell primary-control information includes first information and/or second information of the battery system managed by the battery management system, and the second information is obtained based on the first information.

The first information includes one or more pieces of the following information of the battery system:
internal cell status information, external cell status information, module status information, and sensing status information.

The second information includes one or more pieces of the following information of the battery system:
a state of charge, a state of health, a state of safety, a battery level indication, power, a highest temperature of a single cell, a lowest temperature of a single cell, a highest voltage of a single cell, a lowest voltage of a single cell, a total current, an insulation status, alarm information, fault information, and an electronic switch status.

In a possible implementation, the battery prompt information includes the first information and/or third information, and the third information is obtained based on the first information.

The third information includes one or more pieces of information in the second information, and/or includes one or more pieces of the following information of the battery system:
dynamic energy consumption, estimated remaining drivable range, estimated remaining drivable time, and estimated remaining charging time.

In a possible implementation, the battery prompt information may be one or more of the following: a numerical value, a ratio, a maximum value, a minimum value, and a difference, or may be in another agreed representation form.

In a possible implementation, the primary-control board is further configured to send the cell primary-control information to a cloud server, and receive a battery control strategy from the cloud server.

In a possible implementation, the primary-control board communicates with the first secondary-control board and the second secondary-control board in a wireless manner.

In this implementation, the primary-control board and the secondary-control board in the battery management system communicate with each other in a wireless manner. This can effectively eliminate or simplify a complex wire harness in the battery system, reduce a weight of the system, save or reduce space occupied by a wire harness, eliminate a safety risk of a short circuit caused by aging of a wire harness, falling off or loosening of an insert, or squeezing or a hit, eliminate or reduce a safety risk of function loss of the battery system caused by a failure of a wire harness or even thermal runaway, and greatly improve flexibility of design of the battery system.

In addition, based on a wireless communication model, the battery management system and the used battery system can better implement automated production and installation, to effectively eliminate risks such as an incorrect connection, a reverse connection, a missing connection, and loosening of inserts caused by human beings. This can improve production efficiency and a yield, and reduce production costs.

In a possible implementation, the primary-control board communicates with the electronic switch in a wireless or wired manner.

In a possible implementation, the wireless communication manner includes one or more of the following: Bluetooth communication, ZigBee, wireless fidelity, infrared, radio frequency, near field communication, an ultra-wideband technology, a wireless local area network, a 60 GHz wireless communication technology, a visible light communication technology, and an ad hoc network technology.

According to a ninth aspect, an embodiment of this application further provides a chip system, including a processor. The processor is coupled to a memory. The memory is configured to store a program or instructions. When the program or the instructions are executed by the processor, the chip system is enabled to implement the method described in the first aspect or each possible implementation according to the first aspect, or the method described in the second aspect or each possible implementation according to the second aspect. The memory may be located inside the chip system, or may be located outside the chip system. There are one or more processors.

According to a tenth aspect, an embodiment of this application further provides a computer-readable storage medium, including instructions. When the instructions are run on a computer, the computer is enabled to perform the method described in the first aspect or each possible implementation according to the first aspect, or the method described in the second aspect or each possible implementation according to the second aspect.

According to an eleventh aspect, an embodiment of this application further provides a computer program product. When the computer program product is run on a computer, the computer is enabled to perform the method described in the first aspect or each possible implementation according to the first aspect, or the method described in the second aspect or each possible implementation according to the second aspect.

It should be understood that for technical effects of the third aspect to the tenth aspect, refer to descriptions of corresponding technical effects in the first aspect and the second aspect. Details are not described herein again.

### BRIEF DESCRIPTION OF DRAWINGS

FIG. 1 is a diagram of a possible battery structure according to an embodiment of this application;
FIG. 2 is a diagram of an architecture of a battery management system according to an embodiment of this application;
FIG. 3 is a diagram of an internal structure of a primary/secondary board according to an embodiment of this application;
FIG. 4 is a diagram of a structure of a second type of battery management system according to an embodiment of this application;
FIG. 5 is a diagram of a structure of a vehicle according to an embodiment of this application;
FIG. 6 is a schematic flowchart of a first type of battery management method according to an embodiment of this application;
FIG. 7 is a diagram of a structure of a third type of battery management system according to an embodiment of this application;
FIG. 8 is a schematic flowchart of a second type of battery management method according to an embodiment of this application;
FIG. 9 is a diagram of a structure of a fourth type of battery management system according to an embodiment of this application;
FIG. 10 is a diagram of a structure of a fifth type of battery management system according to an embodiment of this application;
FIG. 11 is a diagram of a structure of a sixth type of battery management system according to an embodiment of this application;
FIG. 12 is a schematic flowchart of a third type of battery management method according to an embodiment of this application;
FIG. 13 is a diagram of a structure of a seventh type of battery management system according to an embodiment of this application;
FIG. 14 is a schematic flowchart of a fourth type of battery management method according to an embodiment of this application;
FIG. 15 is a diagram of a structure of an eighth type of battery management system according to an embodiment of this application;
FIG. 16 is a diagram of a structure of a ninth type of battery management system according to an embodiment of this application;
FIG. 17 is a schematic flowchart of a fifth type of battery management method according to an embodiment of this application;
FIG. 18 is a diagram of a structure of a tenth type of battery management system according to an embodiment of this application;
FIG. 19 is a diagram of a structure of an eleventh type of battery management system according to an embodiment of this application;
FIG. 20 is a diagram of a structure of a twelfth type of battery management system according to an embodiment of this application;
FIG. 21 is a diagram of a first type of battery management apparatus according to an embodiment of this application; and
FIG. 22 is a diagram of a second type of battery management apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

The following describes some terms in embodiments of this application, to facilitate understanding of a person skilled in the art.
(1) A battery management system (battery management system, BMS) is used to protect a battery pack for safe use, and ensures safety and extends a service life of the battery pack during charging and discharging and use of the battery pack. The battery management system provides a battery management function. The battery management function includes but is not limited to functions of monitoring a status of a battery (for example, a voltage, a current, a temperature, and deformation of the battery), calculating a charging level and a capacity of the battery, and controlling charging, discharging, and communication of the battery.

The battery management system is provided with a primary-control board (which may also be referred to as a primary controller, a primary control, a primary board, or a battery control unit) and a plurality of secondary-control boards (which may also be referred to as secondary controllers, secondary controls, secondary boards, or battery secondary-control units). The secondary-control board is configured to control a corresponding battery based on a control instruction. The primary-control board is a brain of the battery management system, and is configured to make a decision and generate a corresponding control instruction, to instruct the secondary-control board to perform a corresponding operation (charging, discharging, power-off, or the like).

In an example, when a battery system and a device in which the battery management system is located start, the device receives a start signal and starts. In addition, the device enables the battery system and the battery management system, and the battery management system receives a start signal and starts.
(2) Wired communication (wired communication) is a communication manner, and is generally wired telecommunications between communication modules, that is, a manner of transmitting information through a tangible medium such as a metal wire or an optical fiber. An optical or electrical signal may represent a sound, a text, an image, or the like.
(3) Wireless communication (Wireless communication) is a communication manner, is generally transmission communication performed between communication modules without propagation through a conductor or a cable, and generally includes a long-range wireless communication technology, a short-range wireless communication technology, and the like.

A wireless communication technology applied in embodiments of this application may be, for example, a short-range wireless communication technology. That two communication parties transmit information by using a radio wave and a transmission distance is within a short range (for example, within 100 meters) may be referred to as short-range wireless communication, including but not limited to a Bluetooth (bluetooth) technology, ZigBee, a wireless fidelity (wireless fidelity, Wi-Fi) technology, infrared, radio frequency, a near field communication (near field communication, NFC) technology, an ultra-wideband technology, a wireless local area network, a 60 GHz wireless communication technology, a visible light communication technology, an ad hoc network technology, a Wi-Fi Aware technology, a universal short-range communication technology, a short-range wireless communication technology specified by the SparkLink Alliance, and the like. The short-range wireless communication may be widely used in various aspects such as file transfer, remote control, projection, and sensing of surrounding devices (for example, an intelligent vehicle, an intelligent terminal device, a smart home device, and a smart manufacturing device).

A data transmission communication protocol used in wireless communication includes but is not limited to the following types:
a synchronous serial interface SSI (Synchronous Serial Interface) protocol, a universal asynchronous receiver/transmitter UART (Universal Asynchronous Receiver/Transmitter) protocol, an inter-integrated circuit I2C (Inter-Integrated Circuit) protocol, an inter-integrated circuit sound I2S (Inter-Integrated Circuit Sound) protocol, a controller area network CAN (Controller Area Network) bus, and the like.

The following describes several examples of short-range wireless communication technologies.

Bluetooth is a radio technology that supports short-range communication between devices, and can be used for wireless information exchange between a plurality of devices such as a mobile phone, a wireless headset, a notebook computer, and a related peripheral. The "Bluetooth" technology can be used to effectively simplify communication between mobile communication terminal devices, and successfully simplify communication between a device and the Internet, so that data is transmitted more rapidly and efficiently, and a path for wireless communication is widened.

The wireless fidelity (wireless fidelity, Wi-Fi) technology is also referred to as a wireless local area network (wireless local area network, WLAN) direct connection or Wi-Fi Direct and is a member of the Wi-Fi protocol suite, and enables devices to easily connect to each other without a need for an intermediary wireless access point. Use of the wireless fidelity technology ranges from web browsing to file transfer, and the wireless fidelity technology enables a plurality of devices to communicate with each other simultaneously, which can take full advantage of a Wi-Fi speed. Devices that comply with this standard can be easily interconnected even if the devices come from different manufacturers.

The Wi-Fi Aware technology is responsible for sensing and discovery in a Wi-Fi technology, and can help a Wi-Fi device sense a surrounding service, for example, a surrounding device, to implement peer-to-peer (Peer-to-Peer, P2P) message exchange between two devices within a short range by using Wi-Fi Aware. Because Wi-Fi Aware can sense a surrounding device, a plurality of functions may be implemented, for example, sensing a nearby person and establishing a connection, adding a friend, playing a same game, and the like; or discovering a surrounding device, implementing photo sharing or location sharing, and the like; or securely sending a file to a printer without accessing a network (for example, a cellular or wireless network) and the like.

It should be noted that, in addition to the foregoing described short-range wireless communication technologies, another existing short-range wireless communication technology, or another short-range wireless communication technology that may appear in the future with evolution of communication technologies is also applicable to embodiments of this application.

(4) A battery is a power supply including at least one cell or battery module. A cell is a smallest unit of a battery, and is also an electric energy storage unit. When a plurality of cells are packaged together by using a same housing frame and communicate with the outside through a unified boundary, a battery module is formed.

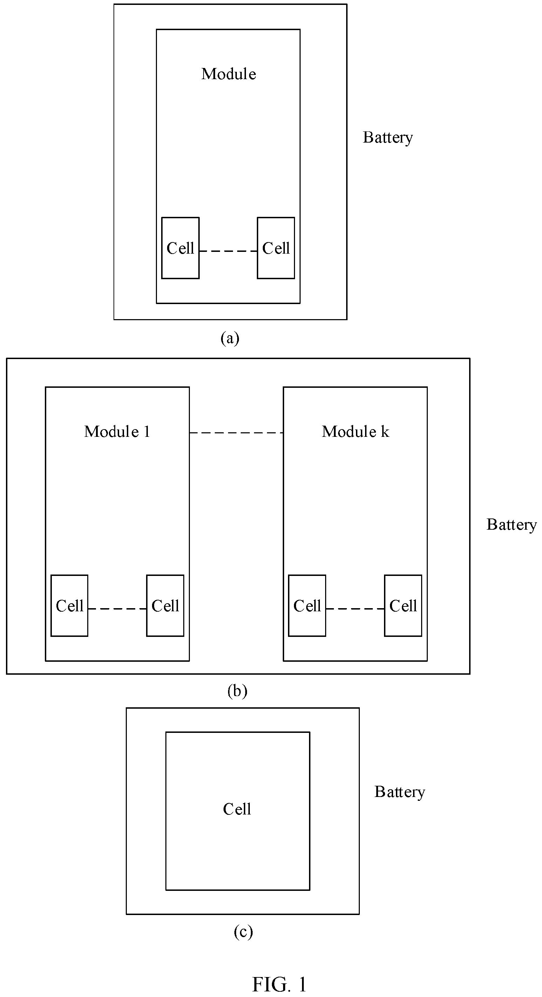

A battery structure in embodiments of this application may be of various types, and is not specifically limited to the following three types:
Battery structure 1: As shown in (a) in FIG. 1, one battery may include one battery module, and one battery module may include at least one cell.
Battery structure 2: As shown in (b) in FIG. 1, one battery may include a plurality of battery modules, and each battery module may include at least one cell.
Battery structure 3: As shown in (c) in FIG. 1, one battery may include one cell.

In an example, in an embodiment of this application, a plurality of batteries may be included. For example, a first battery and a second battery are included. The first battery is configured to supply power to a first control apparatus, and the second battery is configured to supply power to a second control apparatus. In this embodiment of this application, battery information reported by a first node to a second node is mainly battery information of the first battery.

In an example, in this embodiment of this application, in addition to the first battery and the second battery, a third battery may be included. In this case, the second node is decoupled from a manner of supplying power to the second control apparatus, and the third battery independently supplies power to the second node.

Based on the foregoing descriptions of the terms in embodiments of this application, the following describes in detail a battery management system provided in embodiments of this application and a method for performing battery management by using the battery management system provided in this application. The battery management system provided in embodiments of this application may be used in a scenario of detecting and managing a battery, for example, may be used in a new energy vehicle or an energy storage system.

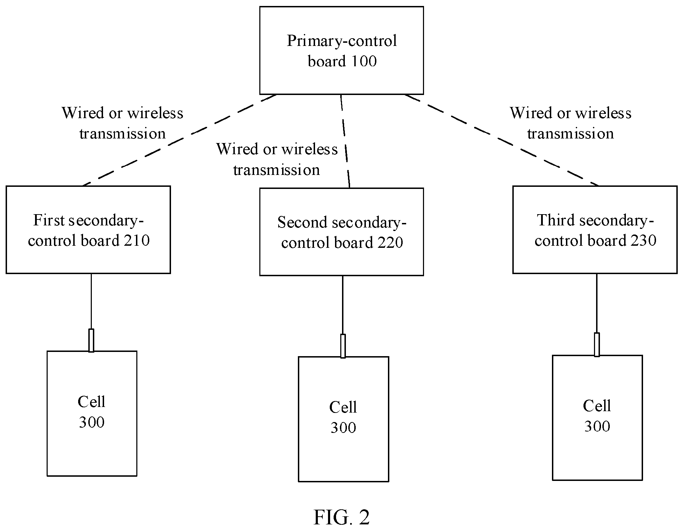

Refer to FIG. 2. In an embodiment of this application, a battery management system may include a primary-control board 100, a plurality of secondary-control boards 200, and a plurality of cells or cell groups 300. The plurality of secondary-control boards may include a first secondary-control board 210, a second secondary-control board 220, a third secondary-control board 230, and the like. For ease of description, the first secondary-control board is used as an example to describe the secondary-control board in the battery management system.

The first secondary-control board is configured to manage a first cell or a first cell group, and is configured to send first cell status information to the primary-control board. The first cell status information includes status information of the first cell or status information of a part or all of cells in the first cell group.

In an example, the first secondary-control board is in an electrical connection to the first cell or the first cell group.

The electrical connection in this embodiment of this application includes one or more of the following: a wire harness connection, a flexible printed circuit FPC connection, a printed circuit board PCB connection, a pin (PIN) connection, an insert connection, a solder connection, and a connector connection.

The primary-control board is configured to send first control information to the first secondary-control board. The first control information is used by the first secondary-control board to manage the first cell or the first cell group.

In an example, the first control information may be a sampling instruction, a balance instruction, a drive instruction, a control instruction for controlling a running mode of the first secondary-control board, or another agreed instruction.

A running mode in this embodiment of this application may be a working mode, a low power consumption mode, a sleep mode, or another preset mode. The working mode is a continuous normal working mode, and one or more apparatuses in the battery management system continuously perform a preset function. The low power consumption mode is to periodically and intermittently complete a preset function. For example, a working period of the low power consumption mode is set to be longer than a working period of the working mode, so as to provide some functions on the premise of low power consumption. The sleep mode is a working stop mode. Generally, when a battery system or a device in which the battery management system is located is in a low power consumption mode or a running stop state, the battery management system starts a low power consumption mode or a sleep mode.

In addition, in some other embodiments, apparatuses or modules in the battery management system in this embodiment of this application may work in different modes at a same time. For example, the primary-control board in the battery management system is in a low power consumption mode, and the first secondary-control board is in a working mode.

It may be understood that, the battery management system in this embodiment of this application includes the plurality of secondary-control boards, and therefore, the primary-control board may further receive control information sent by another secondary-control board. For example, the primary-control board receives second cell status information from a second secondary node, where the second cell status information includes status information of a second cell managed by the second secondary-control board corresponding to the second secondary node or status information of a part or all of cells in a second cell group managed by the second secondary-control board; and controls, based on the second cell status information, a primary node to send control information to the second secondary node.

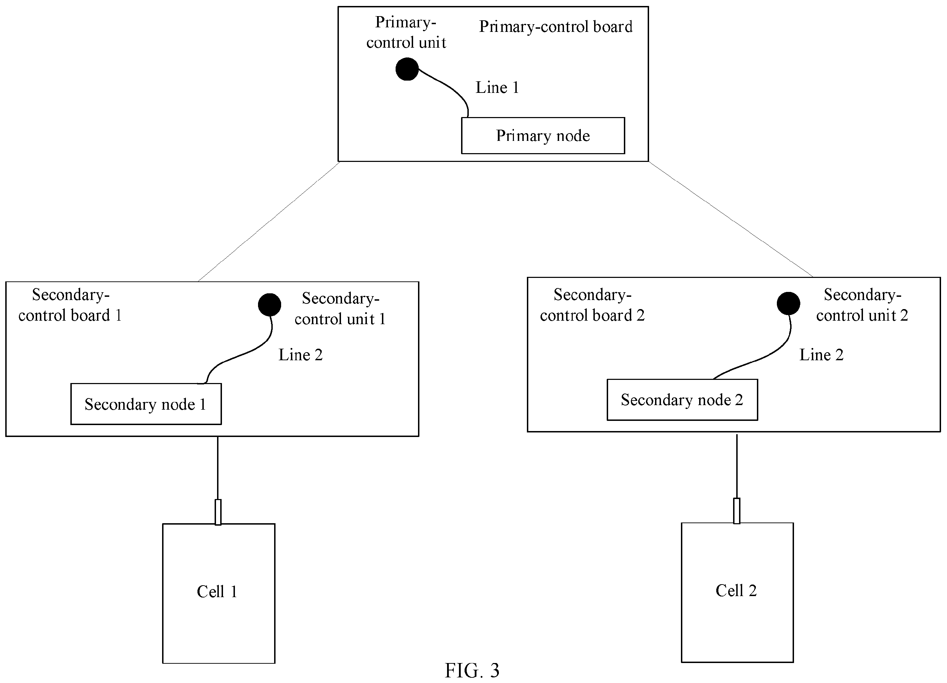

For example, as shown in FIG. 3, it is assumed that a battery management system includes one primary-control board, a secondary-control board 1, and a secondary-control board 2. A primary node and a primary-control unit may be deployed on the primary-control board, and the primary-control unit may be connected to the primary node through an internal line 1 on the primary-control board. A secondary node 1 and a secondary-control unit 1 may be deployed on the secondary-control board 1, and the secondary-control unit 1 may be connected to the secondary node 1 through an internal line 2 on the secondary-control board 1. A secondary node 2 and a secondary-control unit 2 may be deployed on the secondary-control board 2, and the secondary-control unit 2 may be connected to the secondary node 2 through an internal line 2 on the secondary-control board 2. A first secondary-control unit is configured to obtain first cell status information and control a first secondary node to send the first cell status information to the primary node, and is further configured to manage a first cell or one or more cells in a first cell group based on control information.

The first secondary node is configured to receive control information from the primary node.

The primary node is configured to receive the first cell status information from the first secondary node.

The primary-control unit is configured to control the primary node to send the control information to the first secondary node. The control information is used by a first secondary-control board to manage the first cell or the first cell group.

Further, in this embodiment of this application, communication transmission may be performed between the primary-control board and the secondary-control board in a wired or wireless manner.

In an example, when communication transmission is performed between the primary-control board and the secondary-control board in the battery management system in a wired manner, the communication transmission may be performed through a connected wired line between the primary-control board and the secondary-control board.

When wireless communication transmission is performed between the primary-control board and the secondary-control board, the primary-control board may perform, based on an internal wireless transmission module, the communication transmission with a wireless transmission module inside the secondary-control board. In this case, the secondary node deployed on the secondary-control board may be a wireless transmission module, and there may be one or more manners of performing wireless transmission based on the wireless transmission module. The secondary node may use a deployed software program to load a wireless transmission manner. For example, the secondary node may use an internally deployed software program to load a wireless transmission manner of narrow pulse transmission, to implement wireless transmission to the primary-control board. Similarly, the primary node deployed on the primary-control board may be a wireless transmission module, and is configured to receive, in a wireless transmission manner, cell status information sent by the secondary node, and send control information to the secondary node.

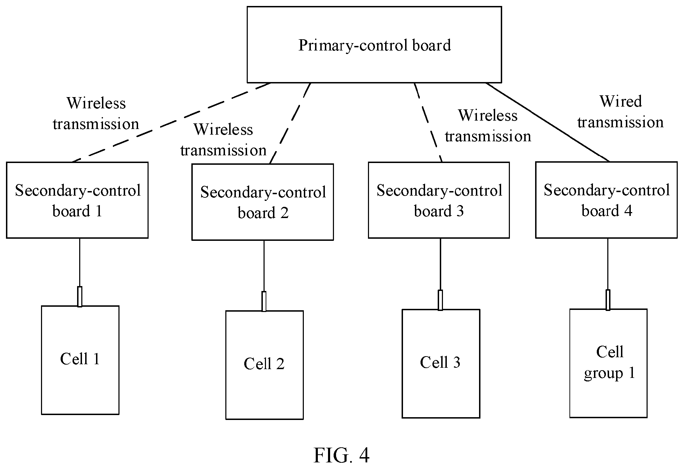

For example, as shown in FIG. 4, it is assumed that a battery management system includes one primary-control board and four secondary-control boards, which are a secondary-control board 1 to a secondary-control board 4. The primary-control board performs wireless communication with the secondary-control board 1 to the secondary-control board 3, and the primary-control board performs wired transmission with the secondary-control board 4. The secondary-control board 1 is configured to manage a cell 1, the secondary-control board 2 is configured to manage a cell 2, the secondary-control board 3 is configured to manage a cell 3, and the secondary-control board 4 is configured to manage a cell group 1. One cell group includes a plurality of cells, and a secondary-control board is in an electrical connection to a corresponding cell or cell group through a wire harness.

Further, the battery management system in embodiments of this application may be installed on a terminal device, and the terminal device includes but is not limited to a vehicle.

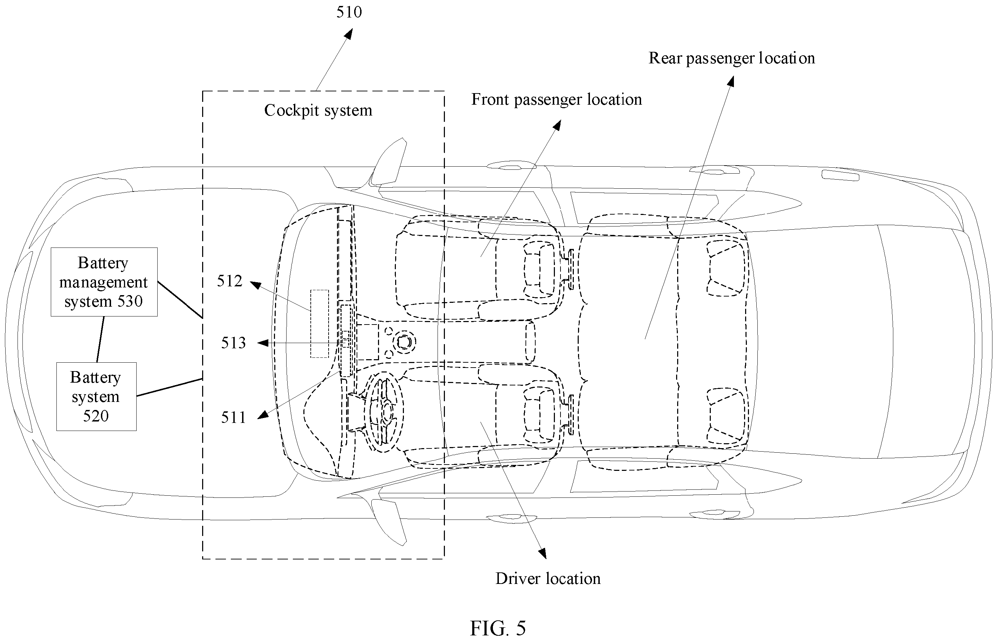

For example, FIG. 5 is a top view of a vehicle according to an embodiment of this application. The vehicle includes a body and a cockpit. The inside of the cockpit includes a cockpit system 510 located in front of a driver location and a front passenger location. The body includes a battery system 520 located at a vehicle head and a battery management system 530 configured to manage the battery system. The battery management system 530 manages the battery system in the vehicle, so that safe running of the battery system in the vehicle can be better ensured, and a service life of the battery system in the vehicle can be prolonged. The cockpit system 510 further includes a cockpit controller 511, a vehicle-mounted display screen 512, a vehicle-mounted speaker 513, and the like. The battery management system 530 may exchange information with the cockpit system 510 through a connected line between the battery management system 530 and the cockpit system 510.

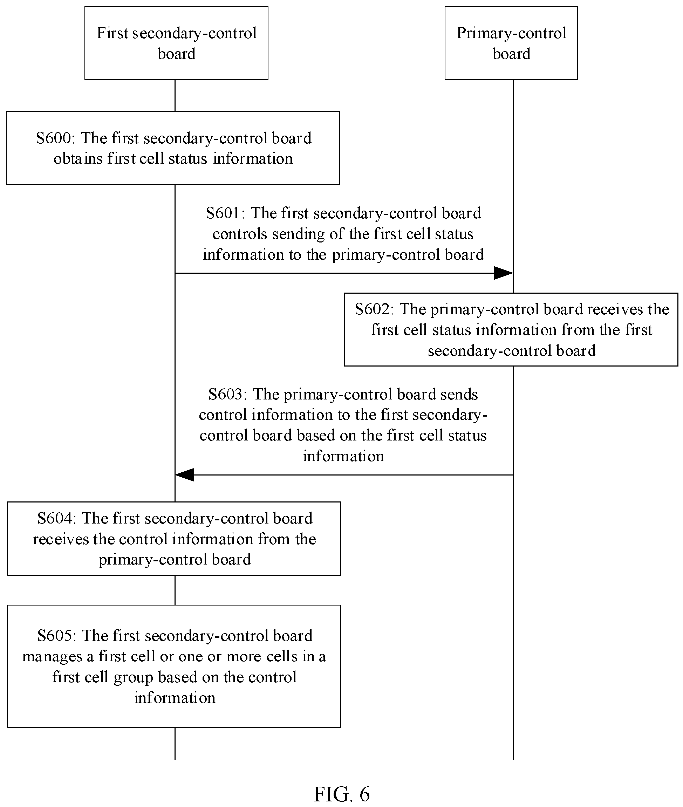

The foregoing briefly describes an application architecture in embodiments of this application. The following describes a procedure in which a battery system management method is performed based on the application architecture shown in FIG. 1 in an embodiment of this application. For details, refer to FIG. 6.

S600: A first secondary-control board obtains first cell status information.

The first cell status information includes status information of a first cell managed by the first secondary-control board or status information of a part or all of cells in a first cell group managed by the first secondary-control board.

In this step, a collection chip deployed on the first secondary-control board may be used to obtain the first cell status information.

In an example, the collection chip in this embodiment of this application may be deployed together with a first secondary node on the first secondary-control board. For example, the collection chip is located inside the first node, or the first node further has a function of collecting battery information. A location relationship between the first node and the collection chip may be flexibly designed, to enrich a manner of constructing a battery system and improve flexibility.

S601: The first secondary-control board controls sending of the first cell status information to a primary-control board.

In this step, the first secondary node deployed on the first secondary-control board may be used to send the first cell status information to a primary node deployed on the primary-control board.

S602: The primary-control board receives the first cell status information from the first secondary-control board.

In this step, the primary node deployed on the primary-control board may be used to receive the first cell status information sent by the first secondary node deployed on the first secondary-control board.

S603: The primary-control board sends control information to the first secondary-control board based on the first cell status information.

The control information is used by the first secondary-control board to manage the first cell or the first cell group.

In this step, a primary-control unit deployed on the primary-control board may be used to determine the control information based on the first cell status information, and then the primary-control unit may send the control information to the primary node through a line connected to the primary node, so that the primary node sends the control information to the first secondary node on the first secondary-control board.

S604: The first secondary-control board receives the control information from the primary-control board.

In this step, the first secondary node deployed on the first secondary-control board may be used to receive the control information sent by the primary node on the primary-control board.

S605: The first secondary-control board manages the first cell or one or more cells in the first cell group based on the control information.

In this step, the first secondary node on the first secondary-control board may be used to send the control information to a first secondary-control unit through a connected line between the first secondary node and the first secondary-control unit, so that the first secondary-control unit manages the first cell or one or more cells in the first cell group based on the control information.

Further, embodiments of this application provide several system architectures obtained through modification and optimization based on the system architecture shown in FIG. 2. The system architectures are not specifically limited to the following nine types.

### System architecture 1: A battery management system further includes a first sensor and/or a second sensor.

The first sensor is a first sensor configured to collect internal cell status information of a cell or a cell group, and report the collected internal cell status information to a corresponding secondary-control board. The second sensor is a second sensor configured to collect external status information of a cell or a cell group, and report the collected external cell status information to a corresponding secondary-control board.

The internal cell status information includes one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group. The external status information includes one or more of the following: an external temperature, a voltage, a current, a stress, a gas type, gas pressure, a gas concentration, an electrolyte, smoke sensing, and an internal resistance of the cell or the cell group.

In an example, in this embodiment of this application, the first sensor and/or the second sensor may be in an electrical connection to a secondary-control board in the battery management system.

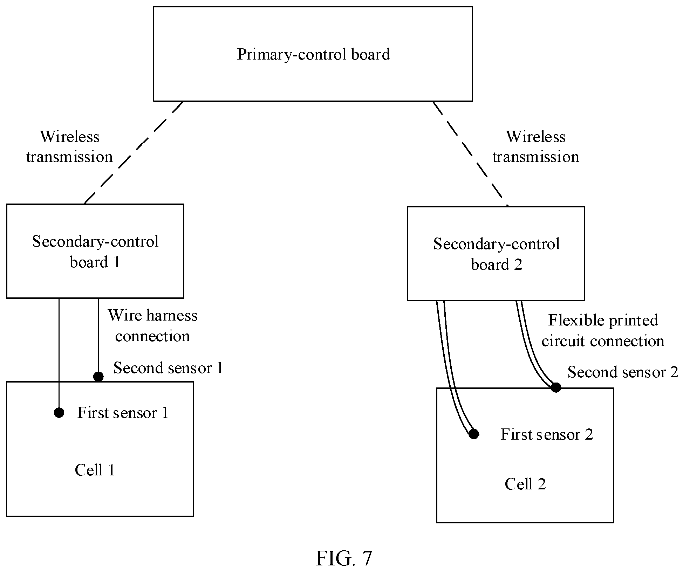

For example, as shown in FIG. 7, a battery management system includes a primary-control board, a secondary-control board 1, and a secondary-control board 2. The secondary-control board 1 is in an electrical connection to a first sensor 1 and a second sensor 1 through wire harnesses. The first sensor 1 is disposed inside a cell 1, and is configured to collect internal cell status information of the cell 1 and report the collected internal cell status information of the cell 1 to the secondary-control board 1. The second sensor 1 is disposed outside the cell 1, and is configured to collect external cell status information of the cell 1 and report the collected external cell status information of the cell 1 to the secondary-control board 1. The secondary-control board 2 is connected to a first sensor 2 and a second sensor 2 through a flexible printed circuit. The first sensor 2 is disposed inside a cell 2, and is configured to collect internal cell status information of the cell 2 and report the collected internal cell status information of the cell 2 to the secondary-control board 2. The second sensor 2 is disposed outside the cell 2, and is configured to collect external cell status information of the cell 2 and report the collected external cell status information of the cell 2 to the secondary-control board 2.

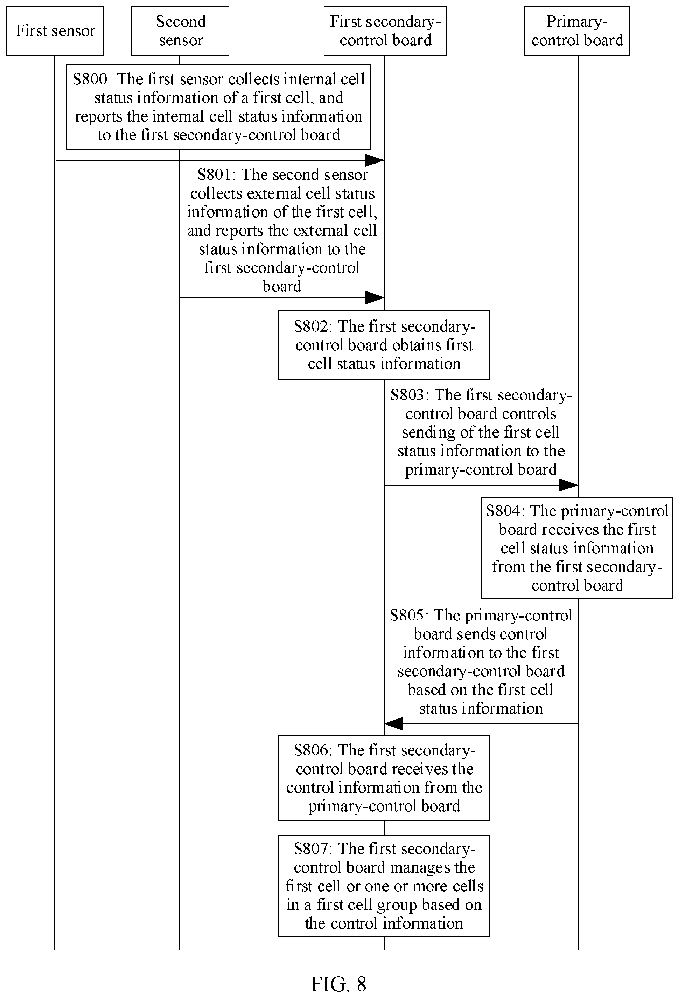

The following describes a procedure in which a battery system management method is performed based on the application architecture shown in FIG. 7 in an embodiment of this application. For details, refer to FIG. 8.

S800: A first sensor collects internal cell status information of a first cell, and reports the internal cell status information to a first secondary-control board.

The internal cell status information includes one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or a cell group.

In an example, when a first secondary node and a first secondary-control unit are deployed on the first secondary-control board, and the first sensor is in an electrical connection to the first secondary node deployed on the first secondary-control board, the first sensor may send the collected internal cell status information of the first cell to the first secondary node through a connected line between the first sensor and the first secondary node.

In addition, after the first secondary node obtains the internal status information of the first cell, the first secondary node may further send the internal status information of the first cell to the first secondary-control unit through a connected line between the first secondary node and the first secondary-control unit, so that the first secondary-control unit processes the internal cell status information of the first cell. For example, the first secondary-control unit may perform filtering and screening on the received internal status information of the first cell, to obtain internal cell status information that needs to be uploaded to a primary-control board. For another example, the first secondary-control unit may integrate the received internal status information of the first cell and received external status information of the first cell, and then upload integrated cell status information to the primary-control board.

In another example, when a first secondary node and a first secondary-control unit are deployed on the first secondary-control board, and the first sensor is in an electrical connection to the first secondary-control unit deployed on the first secondary-control board, the first sensor may directly send the collected internal cell status information of the first cell to the first secondary-control unit through a connected line between the first sensor and the first secondary-control unit.

S801: A second sensor collects external cell status information of the first cell, and reports the external cell status information to the first secondary-control board.

The external cell status information includes one or more of the following: an external temperature, a voltage, a current, a stress, a gas type, gas pressure, a gas concentration, an electrolyte, smoke sensing, and an internal resistance of the cell or a cell group.

In an example, when a first secondary node and a first secondary-control unit are deployed on the first secondary-control board, and the second sensor is in an electrical connection to the first secondary node deployed on the first secondary-control board, the second sensor may send the collected external cell status information of the first cell to the first secondary node through a connected line between the second sensor and the first secondary node.

In addition, after the first secondary node obtains the external status information of the first cell, the first secondary node may further send the external status information of the first cell to the first secondary-control unit through a connected line between the first secondary node and the first secondary-control unit, so that the first secondary-control unit processes the external cell status information of the first cell. For example, the first secondary-control unit may perform filtering and screening on the received external status information of the first cell, to obtain external cell status information that needs to be uploaded to a primary-control board. For another example, the first secondary-control unit may integrate the received external status information of the first cell and the received internal status information of the first cell, and then upload integrated cell status information to the primary-control board.

In another example, when a first secondary node and a first secondary-control unit are deployed on the first secondary-control board, and the second sensor is in an electrical connection to the first secondary-control unit deployed on the first secondary-control board, the second sensor may directly send the collected external cell status information of the first cell to the first secondary-control unit through a connected line between the second sensor and the first secondary-control unit.

S802: The first secondary-control board obtains first cell status information.

The first cell status information includes the internal cell status information and/or the external cell status information of the first cell.

S803: The first secondary-control board sends the first cell status information to a primary-control board.

In an example, after receiving first cell status information reported by a sensor, the first secondary node on the first secondary-control board directly sends the first cell status information to a primary node on the primary-control board.

In another example, after receiving first cell status information reported by a sensor, the first secondary node on the first secondary-control board sends the first cell status information to the first secondary-control unit on the first secondary-control board, then receives analyzed and processed first cell status information sent by the first secondary-control unit, and finally sends the first cell status information to the primary-control board.

In another example, after receiving first cell status information reported by a sensor, the first secondary-control unit on the first secondary-control board directly sends the first cell status information to the first secondary node on the first secondary-control board; or analyzes and processes the first cell status information, and sends analyzed and processed first cell status information to the primary-control board.

S804: The primary-control board receives the first cell status information from the first secondary-control board.

In this step, a primary node on the primary-control board may be used to receive the first cell status information sent by the first secondary node on the first secondary-control board.

S805: The primary-control board sends control information to the first secondary-control board based on the first cell status information.

In this step, the primary node on the primary-control board may be used to send the received first cell status information to a primary-control unit on the first secondary-control board. The primary-control unit determines the control information based on the first cell status information, and sends the control information to the primary node. After receiving the control information, the primary node sends the control information to the first secondary node on the first secondary-control board.

S806: The first secondary-control board receives the control information from the primary-control board.

In this step, the first secondary node on the first secondary-control board may be used to receive the control information sent by the primary node on the primary-control board.

S807: The first secondary-control board manages the first cell or one or more cells in a first cell group based on the control information.

In this step, the first secondary node on the first secondary-control board may be used to send the control information to the first secondary-control unit through a connected line between the first secondary node and the first secondary-control unit, so that the first secondary-control unit manages the first cell or one or more cells in the first cell group based on the control information.

### System architecture 2: A battery management system may further include a balance module located on a secondary-control board.

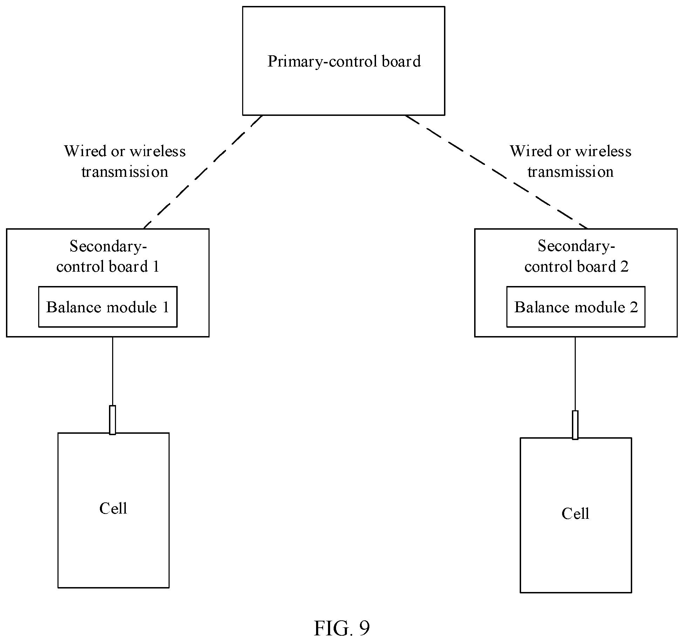

For example, as shown in FIG. 9, a battery management system includes a primary-control board, a secondary-control board 1, and a secondary-control board 2. The secondary-control board 1 includes a balance module 1, and the secondary-control board 2 includes a balance module 2. The battery management system may perform balance management by using the balance module 1 and the balance module 2. After a battery is used, a problem of degradation of cell consistency occurs, for example, a problem such as inconsistency of battery internal resistances or battery voltages occurs, which seriously affects performance and safety of a battery system. The balance management can effectively reduce differences in cell consistency and between a highest voltage or state of charge of a single cell and a lowest voltage or state of charge of a single cell, to re-obtain good battery consistency and improve performance and safety of the battery system.

In this embodiment of this application, the following two balance operations may be performed based on the balance module.

Balance operation 1: The balance module receives a balance instruction from a primary-control board through a secondary node on the secondary-control board on which the balance module is located, and performs a balance operation.

For example, it is assumed that a first secondary-control unit on a first secondary-control board further has a balance management function. After receiving a balance instruction from a primary-control board, a first secondary node on the first secondary-control board sends the balance instruction to the first secondary-control unit through a connected line between the first secondary node and the first secondary-control unit, so that the first secondary-control unit executes the balance instruction. In addition, after executing the balance instruction, the first secondary-control unit may further send an execution result of the balance instruction to the primary-control board through the first secondary node.

For example, it is assumed that a first secondary-control board includes a balance module in addition to a first secondary-control unit and a first secondary node, and the balance module is configured to perform balance management. After receiving a first balance instruction from a primary-control board, the first secondary node on the first secondary-control board sends the first balance instruction to the first secondary-control unit through a connected line between the first secondary node and the first secondary-control unit. The first secondary-control unit processes and analyzes the first balance instruction to obtain a second balance instruction, and then sends the second balance instruction to the balance module through a connected line between the first secondary-control unit and the balance module, so that the balance module performs the balance management.

For example, it is assumed that a first secondary-control board includes a balance module in addition to a first secondary-control unit and a first secondary node, and the balance module is configured to perform balance management. After receiving a balance instruction from a primary-control board, the first secondary node on the first secondary-control board sends the balance instruction to the first secondary-control unit through a connected line between the first secondary node and the first secondary-control unit. The first secondary-control unit directly sends the balance instruction to the balance module through a connected line between the first secondary-control unit and the balance module, so that the balance module performs the balance management.

Balance operation 2: The balance module receives cell status information from another secondary-control board through a secondary node on the secondary-control board on which the balance module is located, and performs a balance operation.

For example, it is assumed that a battery management system includes a secondary-control board 1 to a secondary-control board 3, the secondary-control board 1 to the secondary-control board 3 may transmit cell status information to each other, and secondary-control units that respectively correspond to the secondary-control board 1 to the secondary-control board 3 have a balance management function. For example, for the secondary-control board 1, a secondary node 1 on the secondary-control board 1 may be used to receive cell status information 2 sent by the secondary-control board 2 and cell status information 3 sent by the secondary-control board 3, and then send the cell status information 2 and the cell status information 3 to a secondary-control unit 1 on the secondary-control board 1 through a connected line between the secondary node 1 and the secondary-control unit 1. Then, the secondary-control unit 1 determines a balance instruction based on cell status information 1 collected by the secondary-control unit 1, the cell status information 2, and the cell status information 3, and performs balance management based on the balance instruction. In addition, after executing the balance instruction, the secondary-control unit 1 may further send an execution result of the balance instruction to a primary-control board through the secondary node 1.

For example, it is assumed that a battery management system includes a secondary-control board 1 to a secondary-control board 3, the secondary-control board 1 to the secondary-control board 3 may transmit cell status information to each other, and each of the secondary-control board 1 to the secondary-control board 3 includes a balance module in addition to a first secondary-control unit and a first secondary node. For example, for the secondary-control board 1, a secondary node 1 on the secondary-control board 1 may be used to receive cell status information 2 sent by the secondary-control board 2 and cell status information 3 sent by the secondary-control board 3, and then send the cell status information 2 and the cell status information 3 to a secondary-control unit 1 on the secondary-control board 1 through a connected line between the secondary node 1 and the secondary-control unit 1. Then, the secondary-control unit 1 determines a balance instruction based on cell status information 1 collected by the secondary-control unit 1, the cell status information 2, and the cell status information 3, and sends the balance instruction to a balance module 1 on the secondary-control board 1 through a connected line between the secondary-control unit 1 and the balance module 1, so that the balance module 1 performs balance management.

### System architecture 3: A battery management system may further include an electronic switch.

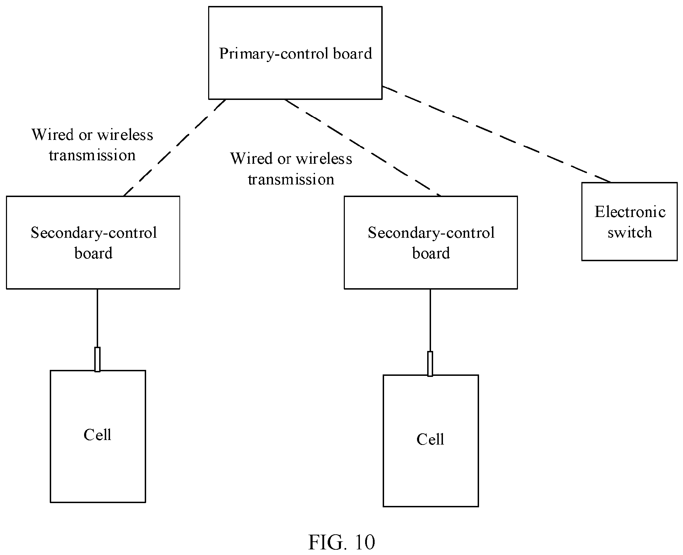

Further, as shown in FIG. 10, a battery management system in an embodiment of this application may further include one or more electronic switches. The electronic switch is configured to receive a switch instruction of a primary-control board, and execute the switch instruction. The switch instruction is used to control turn-off or turn-on of the electronic switch, so as to control, by using the electronic switch, a battery system managed by the battery management system. The electronic switch may perform wireless and/or wired communication with the primary-control board.

The electronic switch in this embodiment of this application includes one or more of the following: a main positive relay, a main negative relay, a main positive metal-oxide-semiconductor field-effect transistor, and a main negative metal-oxide-semiconductor field-effect transistor.

In an example, the electronic switch may complete a matching turn-on or turn-off function when the battery system or a device in which the battery management system is located runs normally, runs with low power consumption, or stops running, and send status information of turn-on or turn-off of a high voltage of the battery system to a battery management primary-control board.

### System architecture 4: A battery management system may further include a first alarm module located on a first secondary-control board.

The first alarm module is configured to report alarm information to a primary-control board. The alarm information indicates that a first cell or one or more cells in a first cell group managed by the first secondary-control board are abnormal.

The cell abnormality in this embodiment of this application may include a result that can be obtained by the first secondary-control board through processing, such as an excessively high or low temperature of a cell, an excessively high or low voltage of a cell, or the like.

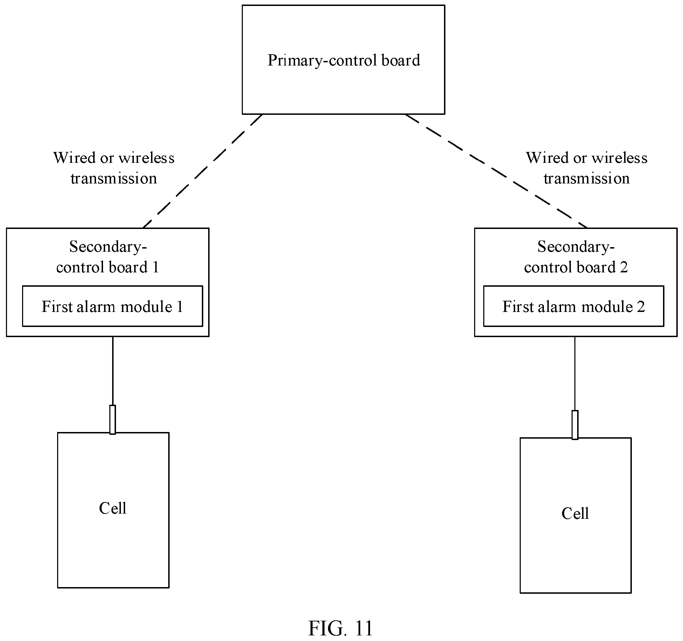

For example, as shown in FIG. 11, it is assumed that a battery management system includes a secondary-control board 1 and a secondary-control board 2, the secondary-control board 1 is provided with a first alarm module 1, and the secondary-control board 2 is provided with a first alarm module 2. When one or more of an internal cell status signal and an external cell status signal collected or calculated by the secondary-control board 1 exceed a threshold or another specified condition, the first alarm module 1 sends an alarm signal 1 to a primary-control board. When one or more of an internal cell status signal and an external cell status signal collected or calculated by the secondary-control board 2 exceed a threshold or another specified condition, the first alarm module 2 sends an alarm signal 2 to the primary-control board. In this way, after receiving the alarm signal from the secondary-control board 1 and/or the secondary-control board 2, the primary-control board determines, based on the corresponding alarm signal, a step to be performed subsequently.

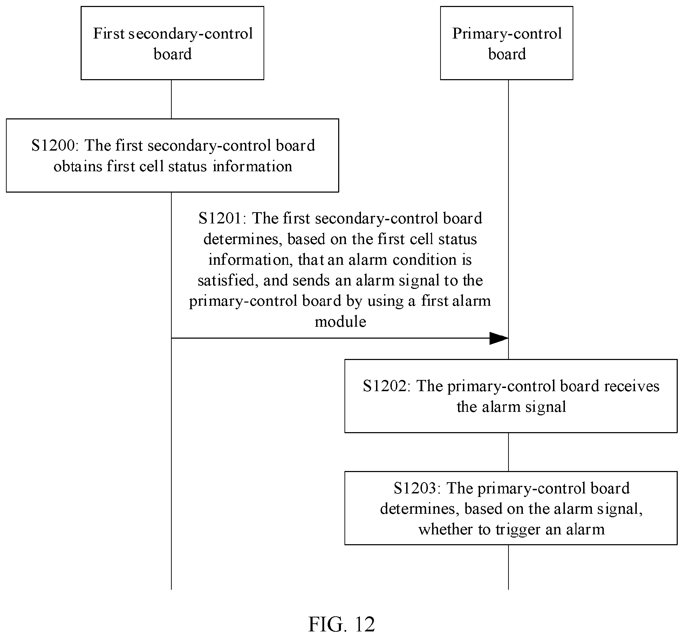

The following describes a procedure in which a battery system management method is performed based on the application architecture shown in FIG. 11 in an embodiment of this application. For details, refer to FIG. 12.

S1200: A first secondary-control board obtains first cell status information.

In this step, a first secondary node deployed on the first secondary-control board may obtain the first cell status information.

S1201: The first secondary-control board determines, based on the first cell status information, that an alarm condition is satisfied, and sends an alarm signal to a primary-control board by using a first alarm module.

The alarm signal may include all first cell status information obtained by the first secondary-control board, or the alarm signal may include abnormal cell status information in the first cell status information.

The alarm condition may be that a part or all of cell status information in the first cell status information is abnormal, for example, cell status information higher than or lower than a normal threshold range exists. A type and a quantity are not limited herein.

For example, a first secondary-control unit deployed on the first secondary-control board may determine, based on the first cell status information, whether the alarm condition is satisfied. When the alarm condition is satisfied, the first secondary-control unit sends an alarm instruction to the first alarm module deployed on the first secondary-control board through a connected line between the first secondary-control unit and the first alarm module, so that the first alarm module sends the alarm signal to the primary-control board.

For example, it is assumed that the first secondary-control unit on the first secondary-control board further has an alarm function. For example, the first secondary-control unit may be integrated with the first alarm module. After determining, based on the first cell status information, that the alarm condition is satisfied, the first secondary-control board on the first secondary-control board sends a signal to a primary node on the primary-control board through the first secondary node on the first secondary-control board.

S1202: The primary-control board receives the alarm signal.

In this step, the primary-control board may receive, by using the primary node on the primary-control board, the alarm signal sent by the first secondary node on the first secondary-control board.

S1203: The primary-control board determines, based on the alarm signal, whether to trigger an alarm.

In this step, the primary node on the primary-control board may be used to send the control information alarm signal to a primary-control unit through a connected line between the primary node and the primary-control unit, so that the primary/secondary-control unit determines, based on the alarm signal, whether to trigger an alarm.

If the primary-control board determines, based on the alarm signal, that the alarm needs to be triggered, the alarm may be provided in one or more of the following manners: sound signal, optical signal, or electrical signal. For example, when the battery management system is a battery management system in a vehicle, and the primary-control board needs to trigger an alarm in this embodiment of this application, voice alarm prompting may be performed by using the vehicle-mounted speaker shown in FIG. 5, or alarm prompting may be performed by using the vehicle-mounted display screen shown in FIG. 5.

In addition, in this embodiment of this application, the primary-control board may further generate a control instruction based on the alarm signal, to effectively resolve an abnormality in a battery system in time, and improve safety of the battery system. For example, when receiving the alarm signal or determining that the alarm condition is satisfied, the primary-control board in the battery management system may control one or more of total negative or total positive electronic switches to be turned off, so as to disconnect a high-voltage loop and cut off a current in the battery system. This helps stop continuous charging of the battery system, and eliminate or reduce a probability of thermal runaway of the battery system, to ensure safety of the battery system.

Further, in this embodiment of this application, the first secondary-control board may configure a communication priority for the alarm signal. Correspondingly, when sending a control instruction in response to the received alarm signal, the primary-control board may set a communication priority for the control instruction according to the communication priority of the alarm signal, to better ensure that alarm information and the control instruction are sent in time.

### System architecture 5: A battery management system may further include a second alarm module located on a primary-control board.

The second alarm module is configured to trigger an alarm when it is determined that received cell status information or cell status information obtained through processing satisfies an alarm condition.

The alarm condition may be that a battery system is abnormal, including abnormal battery states such as over-charging, over-discharging, an excessive current, an excessively high or low temperature of a single cell or the battery system, an excessive battery voltage difference, and an excessive change rate of a signal such as a voltage, a temperature, or a current, and including another abnormal state of the battery system. A type and a quantity are not limited herein.

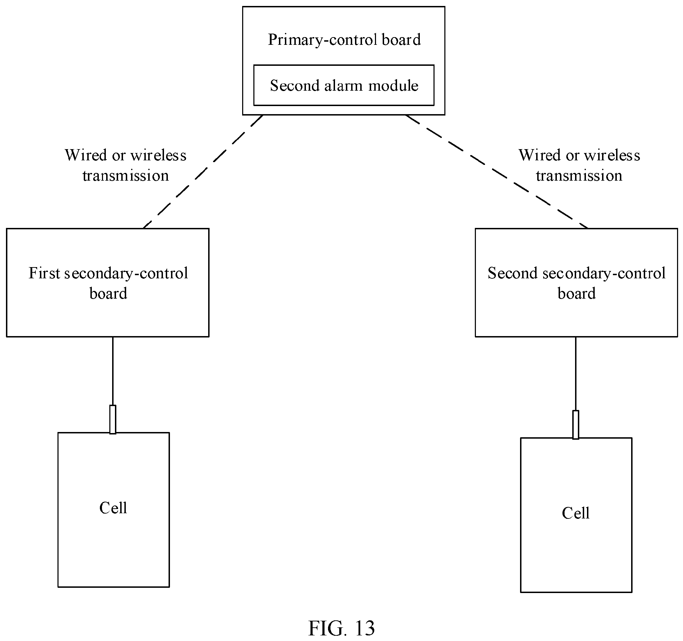

For example, as shown in FIG. 13, a primary-control board in a battery management system is provided with a second alarm module. In this embodiment of this application, when the primary-control board determines whether to trigger an alarm operation, a primary-control unit deployed on the primary-control board may be used to determine whether a received cell status signal sent by a primary node or one or more pieces of cell primary-control information obtained by the primary-control unit based on the cell status signal exceed a threshold or another specified condition, so as to determine whether to trigger an alarm, and send an alarm instruction to the second alarm module when it is determined that the alarm needs to be triggered, so that the second alarm module performs an alarm operation. Alternatively, the second alarm module deployed on the primary-control board may be used to determine whether a received cell status signal sent by the primary node or one or more pieces of received cell primary-control information sent by the primary-control unit exceed a threshold or another specified condition, so as to determine whether to trigger an alarm, and perform an alarm operation when it is determined that the alarm needs to be triggered. Alternatively, the second alarm module on the primary-control board may be integrated with the primary-control unit. To be specific, the primary-control unit further has a function of the second alarm module. When whether to trigger an alarm operation is determined in this embodiment of this application, the primary-control unit may be used to determine whether a received cell status signal sent by the primary node or one or more pieces of cell primary-control information obtained by the primary-control unit based on the cell status signal exceed a threshold or another specified condition, so as to determine whether to trigger an alarm, and perform an alarm operation when it is determined that the alarm needs to be triggered.

The cell primary-control information includes first information and/or second information of a battery system managed by the battery management system, and the second information is obtained through calculation or evolution based on the first information.

The first information includes one or more pieces of the following information of the battery system:
internal cell status information, external cell status information, module status information, and sensing status information.

The second information includes one or more pieces of the following information of the battery system:
a state of charge, a state of health, a state of safety, a battery level indication, power, a highest temperature of a single cell, a lowest temperature of a single cell, a highest voltage of a single cell, a lowest voltage of a single cell, a total current, an insulation status, alarm information, fault information, and an electronic switch status.

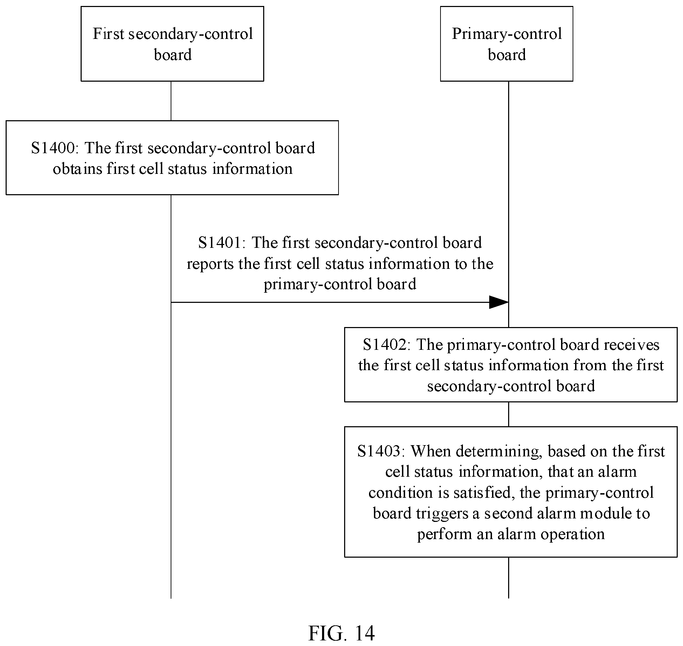

The following describes a procedure in which a battery system management method is performed based on the application architecture shown in FIG. 13 in an embodiment of this application. For details, refer to FIG. 14.

S1400: A first secondary-control board obtains first cell status information.

In this step, the first secondary-control board may obtain the first cell status information based on a first sensor and/or a second sensor.

S1401: The first secondary-control board reports the first cell status information to a primary-control board.

In this step, the first secondary-control board may report, by using a first secondary node deployed on the first secondary-control board, the first cell status information to a primary node deployed on the primary-control board.

S1402: The primary-control board receives the first cell status information from the first secondary-control board.

In this step, the primary-control board may receive, by using the primary node deployed on the primary-control board, the first cell status information sent by the first secondary node deployed on the first secondary-control board.

S1403: When determining, based on the first cell status information, that an alarm condition is satisfied, the primary-control board triggers a second alarm module to perform an alarm operation.

In an example, when the second alarm module is integrated with a primary-control unit on the primary-control board, the primary node on the primary-control board sends the first cell status information to the primary-control unit, so that the primary-control unit determines, based on the first cell status information and cell control information obtained based on the first cell status information, whether the alarm condition is satisfied.

In another example, when the second alarm module and the primary-control unit on the primary-control board are separated, the primary node on the primary-control board sends the first cell status information to the primary-control unit, so that the primary-control unit determines, based on the first cell status information and cell control information obtained based on the first cell status information, whether the alarm condition is satisfied, and sends an alarm instruction to the second alarm module when the alarm condition is satisfied, to enable the second alarm module to perform the alarm operation.

In another example, when the second alarm module and the primary-control unit on the primary-control board are separated, the primary node on the primary-control board sends the first cell status information to the primary-control unit and the second alarm module. The primary-control unit obtains cell control information based on the first cell status information, and sends the cell control information to the second alarm module. The second alarm module determines, based on the first cell status information and/or the cell control information, whether the alarm condition is satisfied, and performs the alarm operation when the alarm condition is satisfied.

If the second alarm module needs to perform the alarm operation, an alarm may be provided in one or more of the following manners: sound signal, optical signal, or electrical signal. For example, when the battery management system is a battery management system in a vehicle, and the second alarm module needs to perform an alarm operation in this embodiment of this application, voice alarm prompting may be performed by using the vehicle-mounted speaker shown in FIG. 5, or alarm prompting may be performed by using the vehicle-mounted display screen shown in FIG. 5.

### System architecture 6: A battery management system may further include at least one third sensor.

The third sensor is configured to receive a sampling instruction from a primary-control board, and execute the sampling instruction. The third sensor and a sampling circuit are used, so that status information of a battery system is periodically collected, and the status information of the battery system is sent to the primary-control board. The status information of the battery system may be understood as battery status information of an entire battery system level.

In an example, the status information of the battery system includes but is not limited to one or more of the following: a current, smoke sensing, an electrolyte, a temperature, gas pressure, gas, expansion force, an internal resistance, and an insulation internal resistance.

The third sensor may be configured as a wired communication and/or wireless communication module. The third sensor may transmit the collected status information of the battery system to the primary-control board in a wireless communication and/or wired communication manner.

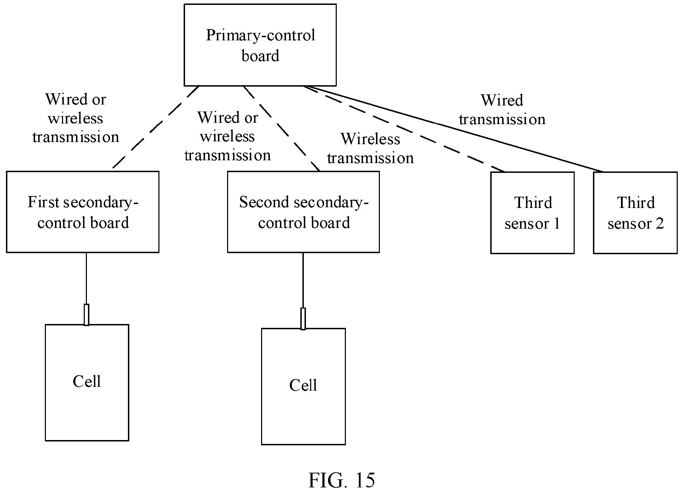

For example, as shown in FIG. 15, a battery management system further includes a third sensor 1 and a third sensor 2. The third sensor 1 performs wireless communication with a primary-control board, and the third sensor 2 performs wired communication with the primary-control board. The third sensor 1 and the third sensor 2 may periodically collect battery status information in the battery management system, or may collect battery status information in the battery management system after receiving a collection instruction sent by the primary-control board, and report the collected battery status information to the primary-control board.

### System architecture 7: A battery management system may further include at least one battery rack management secondary-control board.

A battery system may include a plurality of battery racks, each battery rack includes a plurality of battery modules, and each battery module includes a plurality of cells or cell groups. A primary-control board in the battery management system may monitor and manage an entire battery system. The battery rack management secondary-control board monitors and manages one or more battery racks, that is, is configured to manage at least one secondary-control board. The battery rack secondary-control board may have a communication function, and may further have a processing function. This is not limited herein.

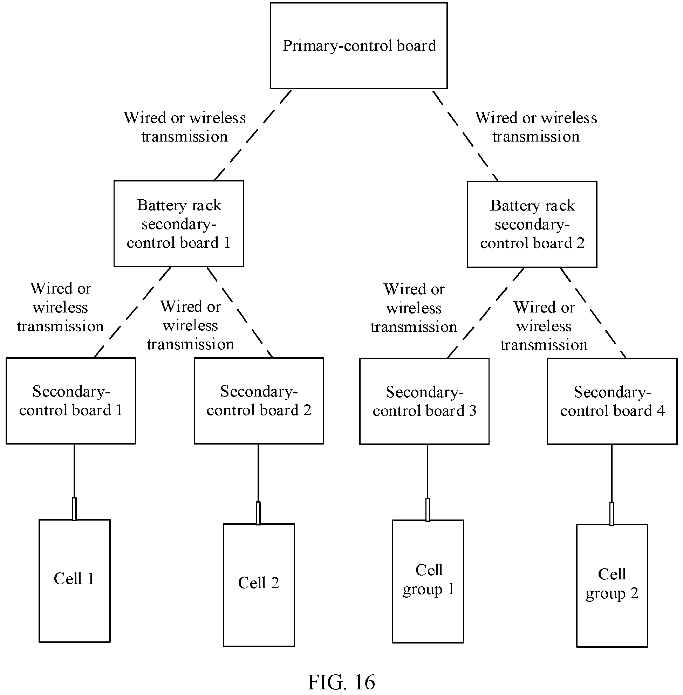

For example, as shown in FIG. 16, a battery management system includes a primary-control board configured to monitor and manage an entire battery system, and further includes a battery rack secondary-control board 1 and a battery rack secondary-control board 2. The battery rack secondary-control board 1 manages a secondary-control board 1 and a secondary-control board 2, and the battery rack secondary-control board 2 manages a secondary-control board 3 and a secondary-control board 4.

The battery system managed by the battery management system may include a plurality of battery racks, each battery rack includes a plurality of battery modules, and each battery module includes a plurality of cells or cell groups. The secondary-control board 1 manages a cell 1, and reports, after obtaining cell status information 1 of the cell 1, the cell status information 1 to the battery rack secondary-control board 1. The secondary-control board 2 manages a cell 2, and reports, after obtaining cell status information 2 of the cell 2, the cell status information 2 to the battery rack secondary-control board 1. The secondary-control board 3 manages a cell group 1, and reports, after obtaining cell status information 3 of the cell group 1, the cell status information 3 to the battery rack secondary-control board 2. The secondary-control board 4 manages a cell group 2, and reports, after obtaining cell status information 4 of the cell group 2, the cell status information 4 to the battery rack secondary-control board 2. The battery rack secondary-control board may report all received cell status information to the primary-control board, or may process received cell status information and report processed cell status information to the primary-control board, or the like.

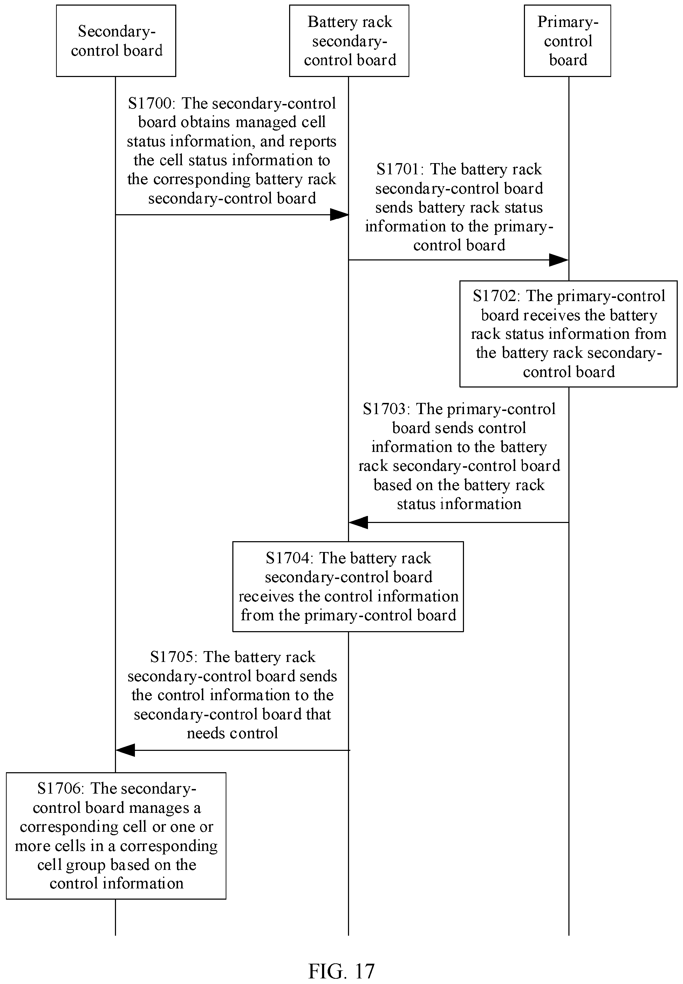

The following describes a procedure in which a battery system management method is performed based on the application architecture shown in FIG. 16 in an embodiment of this application. For details, refer to FIG. 17.

S1700: A secondary-control board obtains managed cell status information, and reports the cell status information to a corresponding battery rack secondary-control board.

In this step, the secondary-control board may obtain the cell status information based on a first sensor and/or a second sensor, and then the secondary-control board may send, by using a secondary node deployed on the secondary-control board, the cell status information to a battery rack secondary node deployed on the battery rack secondary-control board.

S1701: The battery rack secondary-control board sends battery rack status information to a primary-control board.

In this step, the battery rack secondary-control board may send, by using the battery rack secondary node deployed on the battery rack secondary-control board, the cell status information to a primary node deployed on the primary-control board.

The battery rack status information may be status information of one or more cells received by the battery rack secondary-control board, or the battery rack status information may be information obtained after the battery rack secondary-control board processes one or more received cells.

In an example, in this embodiment of this application, after receiving cell status information sent by all managed secondary-control boards, the battery rack secondary-control board may pack and integrate all received cell status information, and send packed and integrated cell status information to the primary-control board. Alternatively, in this embodiment of this application, after receiving cell status information sent by all managed secondary-control boards, the battery rack secondary-control board may pack and integrate abnormal cell status information in all received cell status information, and send packed and integrated cell status information to the primary-control board. Alternatively, after receiving cell status information sent by one secondary-control board, the battery rack secondary-control board may report the cell status information to the primary-control board. Alternatively, after receiving cell status information sent by one secondary-control board, the battery rack secondary-control board may report the cell status information to the primary-control board when determining that the cell status information is abnormal. Alternatively, the battery rack secondary-control board may periodically report, to the primary-control board, received cell status information sent by one or more secondary-control boards.

S1702: The primary-control board receives the battery rack status information from the battery rack secondary-control board.

In this step, the primary-control board may receive, by using the primary node deployed on the primary-control board, the battery rack status information sent by the battery rack secondary node deployed on the battery rack secondary-control board.

S1703: The primary-control board sends control information to the battery rack secondary-control board based on the battery rack status information.

In this step, after receiving the battery rack status information, the primary node on the primary-control board may send the battery rack status information to a primary-control unit on the primary-control board. The primary-control unit determines the control information based on the battery rack status information, and sends the control information to the primary node, so that the primary node sends the control information to the battery rack secondary node on the battery rack secondary-control board.

The control information is used by the battery rack secondary-control board to manage a corresponding battery rack.

S1704: The battery rack secondary-control board receives the control information from the primary-control board.

In this step, the battery rack secondary-control board may receive, by using the battery rack secondary node on the battery rack secondary-control board, the control information sent by the primary node on the primary-control board.

S1705: The battery rack secondary-control board sends the control information to a secondary-control board that needs control.

In this step, the battery rack secondary-control board may send, by using the battery rack secondary node on the battery rack secondary-control board, the control information to a secondary node on the secondary-control board that needs control.

S1706: The secondary-control board manages a corresponding cell or one or more cells in a corresponding cell group based on the control information.

In this step, for the secondary-control board, the secondary node on the secondary-control board may be used to receive the control information, and send the control information to a secondary-control unit on the secondary-control board, so that the secondary-control unit can manage the corresponding cell or one or more cells in the corresponding cell group based on the control information.

### System architecture 8: A battery management system may be further connected to a vehicle control unit.

The vehicle control unit may control output of battery prompt information based on received cell status information or cell primary-control information. The battery prompt information indicates a status of a battery system managed by the battery management system.

In an example, a primary-control board in the battery management system may send received cell status information to the vehicle control unit connected to the battery management system, so that the vehicle control unit can obtain battery prompt information based on the cell status information.

In another example, the primary-control board in the battery management system may process received cell status information to obtain cell primary-control information, and then send the cell primary-control information to the vehicle control unit connected to the battery management system, so that the vehicle control unit can obtain battery prompt information based on the cell primary-control information. The battery prompt information may be the cell primary-control information, or the battery prompt information may be processed cell primary-control information.

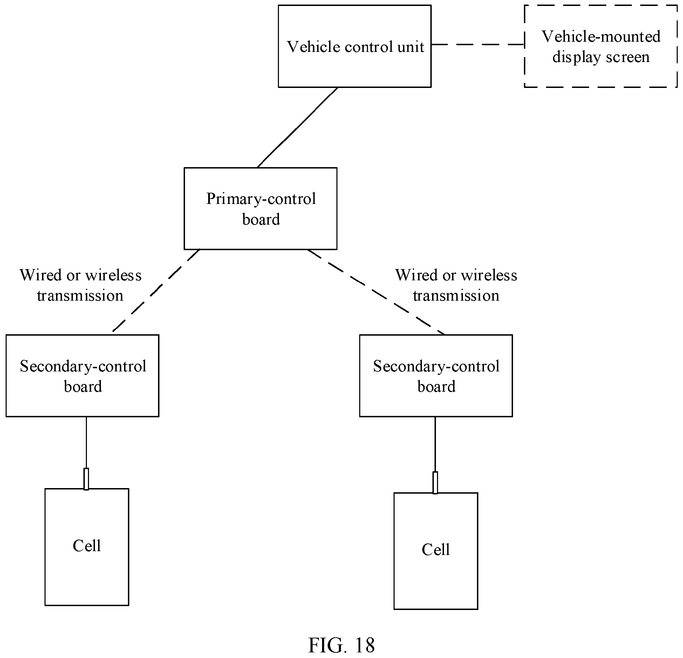

For example, as shown in FIG. 18, the primary-control board in the battery management system and the vehicle control unit are connected and may send signals to each other. The vehicle control unit may be connected to a vehicle-mounted display screen. For example, the vehicle control unit and the vehicle-mounted display screen are in an electrical connection to each other through an external power supply and are powered by the external power supply.

When the vehicle control apparatus in this embodiment of this application needs to output battery prompt information, the vehicle control apparatus may output the battery prompt information in one or more of the following manners: sound signal, optical signal, or electrical signal.

For example, the vehicle control apparatus in this embodiment of this application may output the battery prompt information in a form of sound signal by using a speaker. For another example, the vehicle control apparatus in this embodiment of this application may output the battery prompt information in a form of electrical signal such as picture or video by using a display screen. For another example, the vehicle control apparatus in this embodiment of this application may output the battery prompt information in a form of optical signal by using a signal indicator light. For another example, the vehicle control apparatus in this embodiment of this application may be in a wireless or wired communication connection to a device such as a non-vehicle-mounted speaker, a mobile phone, or another terminal. When the vehicle control apparatus needs to output the battery prompt information, the battery prompt information may be transmitted to the terminal in a form of audio, picture, video, or the like in a wireless or wired communication manner and presented on the terminal, or the battery prompt information may be output in a form of electrical signal by using an APP on a terminal device wirelessly connected to the vehicle control apparatus. For example, the battery prompt information is displayed in a display interface of the APP on the terminal device.

The battery prompt information includes first information and/or third information, and the third information is obtained through calculation or evolution based on the first information.

The first information includes one or more pieces of the following information of the battery system:
internal cell status information, external cell status information, module status information, and sensing status information.

The third information includes one or more pieces of the following information of the battery system:
a state of charge, a state of health, a state of safety, a battery level indication, power, a highest temperature of a single cell, a lowest temperature of a single cell, a highest voltage of a single cell, a lowest voltage of a single cell, a total current, an insulation status, alarm information, fault information, and an electronic switch status.

The cell primary-control information includes one or more of the following:
a state of charge, a state of health, a state of safety, a battery level, power, a temperature, a voltage, a current, an internal resistance, an insulation status, alarm information, fault information, an internal status signal of a cell or a cell group, an external status signal of a cell or a cell group, a battery system sensing signal, a module status signal, and an electronic switch status of the battery system managed by the battery management system.

### System architecture 9: A battery management system may be further connected to a cloud server.

A primary-control board is further configured to directly or indirectly send cell primary-control information to the cloud server, and manage a battery system according to a battery control strategy generated by the cloud server.

The cloud server is configured to update a battery control strategy based on data information sent by a plurality of terminals, and send an updated battery control strategy to a first terminal in the plurality of terminals, so that the first terminal performs a strategy update according to the battery control strategy.

For example, the cloud server may send the updated battery control strategy to a primary-control board in the first terminal through a direct link or a relay device, so that the primary-control board can update a management strategy for a managed battery system according to the battery control strategy. For another example, the cloud server may send the updated battery control strategy to a secondary-control board in the first terminal through a direct link or a relay device, so that the secondary-control board can update a management strategy for a managed cell or cell group according to the battery control strategy. For another example, the cloud server may send the updated battery control strategy to the first terminal, and in this case, the first terminal may be a relay device, so that the relay device sends the battery control strategy to a corresponding battery management system and the like. The relay device may be one or more of the following: a vehicle control unit, a wireless gateway, a wireless access network device, and a roadside unit.

Updating the battery control strategy in this embodiment of this application may be regenerating a battery control strategy, adjusting the original battery control strategy, or the like.

The data information may be cell primary-control information of the terminal, and the cell primary-control information corresponds to a plurality of cells or a plurality of cell groups of the terminal.

Further, when the terminal is a first secondary-control board and/or a primary-control board, the terminal may communicate with a server apparatus through a direct link, or communicate with the server apparatus through a relay device.

In an example, the cloud server provided in this embodiment of this application may process data information of a plurality of vehicles according to one or more of automated big data computing methods such as artificial intelligence, machine learning, deep learning, a neural network, pattern recognition, and statistics, to obtain a battery control strategy.

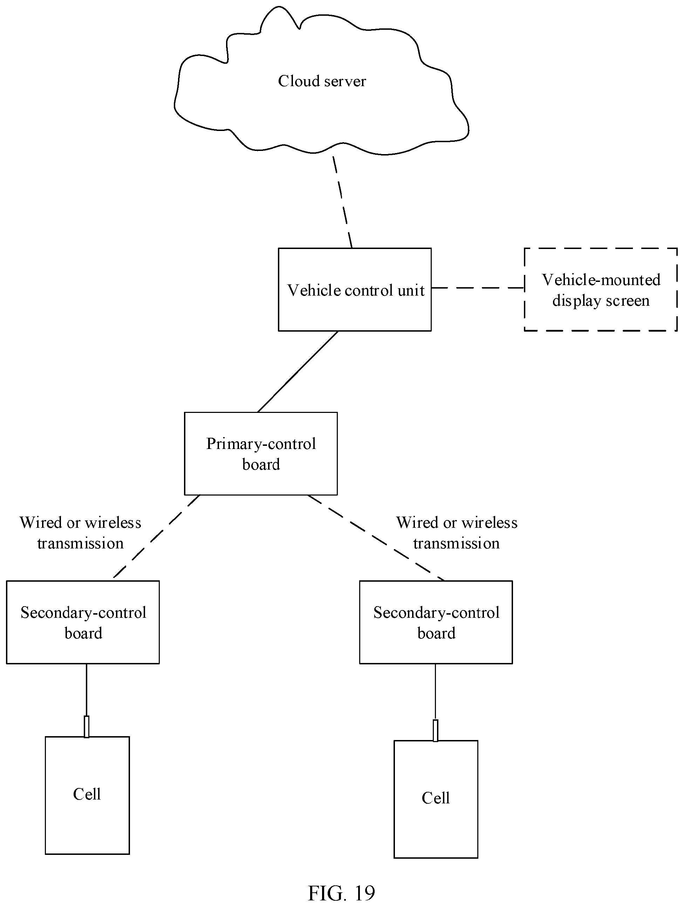

For example, as shown in FIG. 19, the primary-control board in the battery management system may be connected to and communicate with a vehicle-mounted T-box. The vehicle-mounted T-box may be connected to a remote cloud server in a wireless communication manner such as 4G or 5G cellular, or this is generally referred to as an over-the-air (Over-The-Air Technology, OTA) upgrade.

The cloud server may be connected to a national new energy vehicle big data platform in a wireless communication manner, adjust a battery control strategy based on vehicle data information on the big data platform, and send an adjusted battery control strategy to the primary-control board through the vehicle-mounted T-box, so that the primary-control board manages the battery system according to the battery control strategy.

The big data platform in this embodiment of this application may be one or more of the following: a big data platform of a vehicle factory, a local big data platform, and a national big data platform, or may be another remote big data platform. This is not limited herein. In addition, the vehicle data information on the big data platform may be obtained based on cell internal status information, cell external status information, module status information, and sensing status information of a battery system that are reported by a primary-control board in a battery management system in each vehicle through a vehicle-mounted T-box, other variables obtained through further evolution based on the status information or battery primary-control information obtained through calculation, and the like.

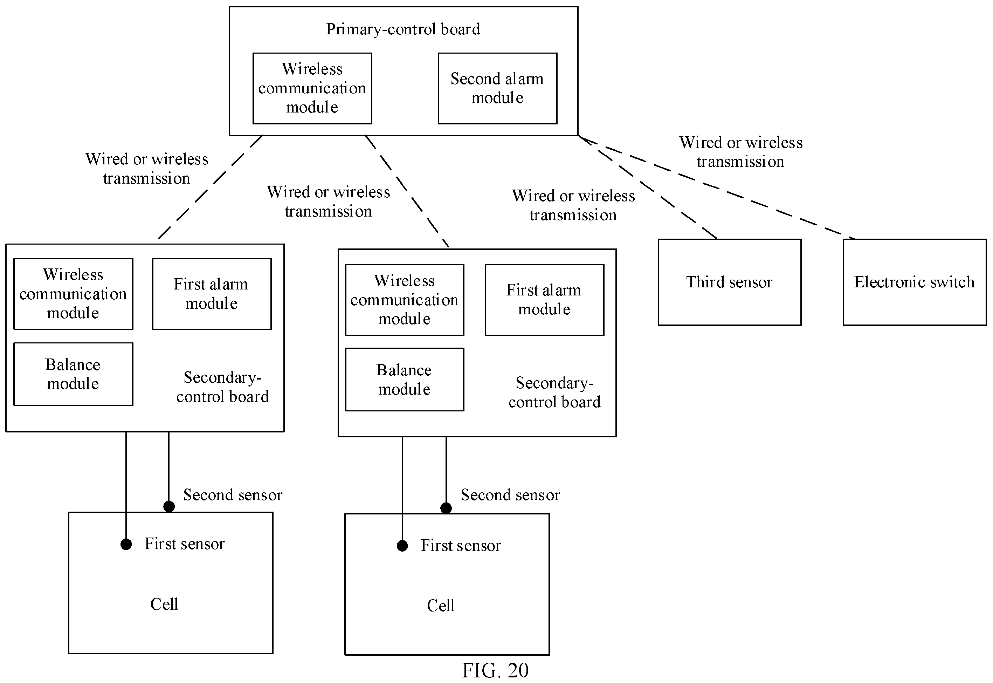

It should be noted that the foregoing several system architectures may be integrated to obtain a new system architecture. For example, as shown in FIG. 20, a battery management system includes the first sensor and/or the second sensor in System architecture 1, and further includes the balance module in System architecture 2, the electronic switch in System architecture 3, the first alarm module in System architecture 4, the second alarm module in System architecture 5, the third sensor in System architecture 6, and the like.

In addition, "at least one" in embodiments of this application means one or more, and "a plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit an order, a time sequence, priorities, or degrees of importance of the plurality of objects. For example, first information and second information are merely used to distinguish between different information, but do not indicate that the two types of information are different in content, priorities, sending sequences, degrees of importance, or the like.

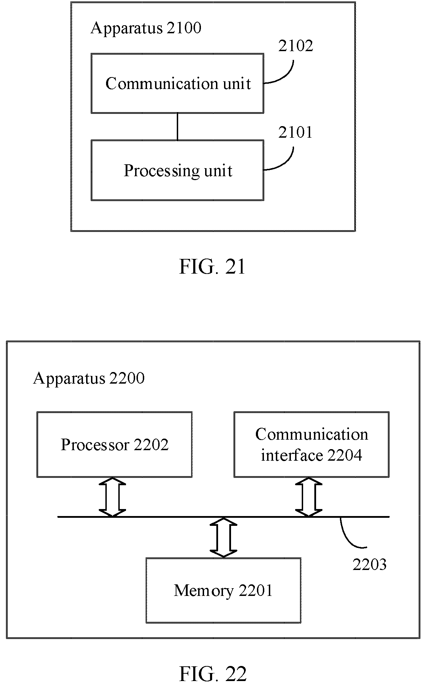

The following describes in detail apparatuses provided in embodiments of this application with reference to FIG. 21 and FIG. 22. It should be understood that descriptions of the apparatus embodiments correspond to the descriptions of the method embodiments. Therefore, for content that is not described in detail, refer to each other.

FIG. 21 is a block diagram of an apparatus 2100 according to an embodiment of this application. The apparatus is configured to implement a function of the primary-control board or the secondary-control board in the foregoing method embodiments. For example, the apparatus may be a software module or a chip system. The chip may include a chip, or may include a chip and another discrete device. The apparatus 2100 includes a processing unit 2101 and a communication unit 2102. The communication unit 2102 is configured to communicate with another device, and may also be referred to as a communication interface, a transceiver unit, an input/output interface, or the like.

In some embodiments, the apparatus 2100 may be configured to implement a function of the primary-control board in the foregoing method. The apparatus 2100 may be a primary-control board, a chip or a circuit configured in a primary-control board, or the like. The processing unit 2101 may be a primary-control unit on a primary-control board, and may be configured to perform a processing related operation of the primary-control board in the foregoing method embodiments. The communication unit 2102 may be a primary node on the primary-control board, and is configured to indicate sending and receiving related operations of the primary-control board in the foregoing method embodiments.

For example, the communication unit 2102 is configured to receive first cell status information from a first secondary-control board. The first cell status information includes status information of a first cell managed by the first secondary-control board or status information of a part or all of cells in a first cell group managed by the first secondary-control board. The processing unit 2101 is configured to send control information to the first secondary-control board based on the first cell status information through the communication unit 2102. The control information is used by the first secondary-control board to manage the first cell or the first cell group.

In an optional implementation, the first cell status information includes one or more of the following: internal cell status information of the first cell or the first cell group collected by using a first sensor and external cell status information of the first cell or the first cell group collected by using a second sensor.

In an optional implementation, the internal cell status information includes one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group.

The external cell status information includes one or more of the following: an external temperature, a voltage, a current, a stress, a gas type, gas pressure, a gas concentration, an electrolyte, smoke sensing, and an internal resistance of the cell or the cell group.

In an optional implementation, the communication unit 2102 is further configured to:
send a switch instruction to an electronic switch to control turn-off or turn-on of the electronic switch, where the electronic switch is configured to control a battery system managed by a battery management system.

The electronic switch includes one or more of the following: a main positive relay, a main negative relay, a main positive metal-oxide-semiconductor field-effect transistor, and a main negative metal-oxide-semiconductor field-effect transistor.

In an optional implementation, the communication unit 2102 is further configured to:
receive, by the primary-control board, alarm information sent by the first secondary-control board, where the alarm information indicates that the first cell or one or more cells in the first cell group are abnormal.

The processing unit 2101 is further configured to:
send the control information to the first secondary-control board based on the alarm information.

In an optional implementation, the processing unit 2101 is further configured to:
trigger an alarm when it is determined that received cell status information or cell status information obtained through processing satisfies an alarm condition.

The alarm condition indicates that one or more pieces of cell status information received by the primary-control board or obtained by the primary-control board through processing are greater than or less than a specified threshold corresponding to the cell status information.

In an optional implementation, the processing unit 2101 is further configured to:
determine cell primary-control information based on the received cell status information.

The communication unit 2102 is further configured to:
send the cell primary-control information to a vehicle control unit, so that the vehicle control unit controls output of battery prompt information based on the cell primary-control information, where the battery prompt information indicates a status of the battery system managed by the battery management system.

In some other embodiments, the apparatus 2100 may be configured to implement a function of the secondary-control board in the foregoing method embodiments. The apparatus 2100 may be a secondary-control board, a chip or a circuit configured in a secondary-control board, or the like. For example, the processing unit 2101 may be a first secondary-control unit on a first secondary-control board, and may be configured to perform a processing related operation of the first secondary-control board in the foregoing method embodiments. The communication unit 2102 may be a first secondary node on the first secondary-control board, and may be configured to perform sending and receiving related operations of the first secondary-control board in the foregoing method embodiments.

For example, the communication unit 2102 is configured to obtain first cell status information. The first cell status information includes status information of a first cell managed by the first secondary-control board or status information of a part or all of cells in a first cell group managed by the first secondary-control board. The processing unit 2101 is configured to control the first secondary node to send the first cell status information to a first primary node. The communication unit 2102 is further configured to receive control information from the first primary node. The processing unit 2101 is further configured to manage the first cell or one or more cells in the first cell group based on the control information.

In an optional implementation, the first cell status information includes one or more of the following: internal cell status information of the first cell or the first cell group collected by using a first sensor and external cell status information of the first cell or the first cell group collected by using a second sensor.

In an optional implementation, the internal cell status information includes one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group.

The external cell status information includes one or more of the following: an external temperature, a voltage, a current, a stress, a gas type, gas pressure, a gas concentration, an electrolyte, smoke sensing, and an internal resistance of the cell or the cell group.

In an optional implementation, the processing unit 2101 is further configured to:
report alarm information to a primary-control board when it is determined that received cell status information or cell status information obtained through processing satisfies an alarm condition.

The alarm information indicates that the first cell or one or more cells in the first cell group are abnormal.

In some other embodiments, the apparatus 2100 may be configured to implement a function of the server apparatus in the foregoing method. The apparatus 2100 may be a cloud server, a chip or a circuit configured in a cloud server, or the like. The processing unit 2101 may be configured to perform a processing related operation of the cloud server in the foregoing method embodiments. The communication unit 2102 is configured to indicate sending and receiving related operations of the cloud server in the foregoing method embodiments.

For example, the communication unit 2102 is configured to receive a plurality of pieces of cell primary-control information from a plurality of terminals. The cell primary-control information corresponds to a plurality of cells or a plurality of cell groups of the terminal. The processing unit 2101 is configured to generate a battery control strategy based on one or more of the plurality of pieces of cell primary-control information. The communication unit 2102 is configured to send the battery control strategy to a first terminal in the plurality of terminals.

In embodiments of this application, division into units is an example, and is merely logical function division. During actual implementation, another division manner may be used. In addition, functional units in embodiments of this application may be integrated into one processor, or each of the units may exist alone physically, or two or more units are integrated into one unit. The integrated unit may be implemented in a form of hardware, or may be implemented in a form of software functional unit.

FIG. 22 is a diagram of an apparatus 2200 according to an embodiment of this application. The apparatus 2200 may be a control panel, for example, a primary-control board or a secondary-control board, or may be a component in a control panel, for example, a chip or an integrated circuit. The apparatus 2200 may include at least one processor 2202 and a communication interface 2204. Further, optionally, the apparatus may include at least one memory 2201. Further, optionally, a bus 2203 may be included. The memory 2201, the processor 2202, and the communication interface 2204 are connected to each other through the bus 2203.

The memory 2201 is configured to provide storage space, and the storage space may store data such as an operating system and a computer program. The memory 2201 mentioned in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that the memory described in this specification is intended to include but is not limited to these memories and any memory of another proper type. The processor 2202 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor unit (microprocessor unit, MPU), an application-specific integrated circuit (application-specific integrated circuit, ASIC), a field programmable gate array (field programmable gate array, FPGA), a complex programmable logic device (complex programmable logic device, CPLD), a coprocessor (assisting the central processing unit in completing corresponding processing and application), and a microcontroller unit (microcontroller unit, MCU).

It should be noted that when the processor is a general-purpose processor, an ASIC, an FPGA or another programmable logic device, a discrete gate or a transistor logic device, or a discrete hardware component, a memory (storage module) may be integrated into the processor.

The communication interface 2204 may be configured to provide an information input or output for the at least one processor. Additionally/Alternatively, the communication interface may be configured to receive data sent from the outside and/or send data to the outside, and may be a wired link interface including an Ethernet cable or the like, or may be a wireless link (Wi-Fi, Bluetooth, universal wireless transmission, a vehicle-mounted short-range communication technology, or the like) interface. Optionally, the communication interface 2204 may further include a transmitter (for example, a radio frequency transmitter or an antenna), a receiver, or the like that is coupled to the interface.

In some embodiments, the apparatus 2200 may be the primary-control board in the foregoing method embodiments or a component in the primary-control board, for example, a chip or an integrated circuit. The processor 2202 in the apparatus 2200 is configured to read a computer program stored in the memory 2201, to control the primary-control board to perform the following operations:
receiving first cell status information from a first secondary-control board, where the first cell status information includes status information of a first cell managed by the first secondary-control board or status information of a part or all of cells in a first cell group managed by the first secondary-control board; and sending control information to the first secondary-control board based on the first cell status information, where the control information is used by the first secondary-control board to manage the first cell or the first cell group.

Optionally, the processor 2202 in the primary-control board may be further configured to: read a program in the memory 2201, and perform the method procedure performed by the primary-control board in S600 to S605 shown in FIG. 6, or perform the method procedure performed by the primary-control board in S800 to S807 shown in FIG. 8, or perform the method procedure performed by the primary-control board in S1200 to S1203 shown in FIG. 12, or perform the method procedure performed by the primary-control board in S1400 to S1403 shown in FIG. 14, or perform the method procedure performed by the primary-control board in S1700 to S1706 shown in FIG. 17.

For specific details, refer to the records in the foregoing method embodiments. Details are not described herein again.

In some other embodiments, the apparatus 2200 may be the secondary-control board in the foregoing method embodiments or a component in the secondary-control board, for example, a chip or an integrated circuit. The processor 2202 in the apparatus 2200 is configured to read a computer program stored in the memory 2201, to control the secondary-control board to perform the following operations:
obtaining first cell status information, where the first cell status information includes status information of a first cell managed by a first secondary-control board or status information of a part or all of cells in a first cell group managed by the first secondary-control board; controlling a first secondary node to send the first cell status information to a first primary node; receiving control information from the first primary node; and managing the first cell or one or more cells in the first cell group based on the control information.

Optionally, the processor 2202 in the first secondary-control board may be further configured to: read a program in the memory 2201, and perform the method procedure performed by the first secondary-control board in S600 to S605 shown in FIG. 6, or perform the method procedure performed by the first secondary-control board in S800 to S807 shown in FIG. 8, or perform the method procedure performed by the first secondary-control board in S1200 to S1203 shown in FIG. 12, or perform the method procedure performed by the first secondary-control board in S1400 to S1403 shown in FIG. 14, or perform the method procedure performed by the first secondary-control board in S 1700 to S 1706 shown in FIG. 17.

In some other embodiments, the apparatus 2200 may be the server apparatus in the foregoing method embodiments or a component in the server apparatus, for example, a chip or an integrated circuit. The processor 2202 in the apparatus 2200 is configured to read a computer program stored in the memory 2201, to control the server apparatus to perform the following operations:
receiving a plurality of pieces of cell primary-control information from a plurality of terminals, where the cell primary-control information corresponds to a plurality of cells or a plurality of cell groups of the terminal; generating a battery control strategy based on one or more of the plurality of pieces of cell primary-control information; and sending the battery control strategy to a first terminal in the plurality of terminals.

Optionally, the processor 2202 in the server apparatus may be further configured to: read a program in the memory 2201, and perform the method procedure performed by the server in S600 to S605 shown in FIG. 6, or perform the method procedure performed by the server in S800 to S807 shown in FIG. 8, or perform the method procedure performed by the server in S1200 to S1203 shown in FIG. 12, or perform the method procedure performed by the server in S1400 to S1403 shown in FIG. 14, or perform the method procedure performed by the server in S1700 to S1706 shown in FIG. 17.

For specific details, refer to the records in the foregoing method embodiments. Details are not described herein again.

An embodiment of this application further provides a computer-readable storage medium, including instructions. When the instructions are run on a computer, the computer is enabled to perform the method described in the foregoing embodiments.

An embodiment of this application further provides a chip system. The chip system includes at least one processor and an interface circuit. Further, optionally, the chip system may include a memory or an external memory. The processor is configured to execute instructions and/or perform data exchange through the interface circuit, to implement the method in the foregoing method embodiments. The chip system may include a chip, or may include a chip and another discrete device.

An embodiment of this application further provides a computer program product, including instructions. When the instructions are run on a computer, the computer is enabled to perform the method described in the foregoing embodiments.

In this embodiment of this application, the processor may be a general-purpose processor, a digital signal processor, an application-specific integrated circuit, a field programmable gate array or another programmable logic device, a discrete gate or transistor logic device, a discrete hardware component, a coprocessor, or the like, and may implement or perform various methods, steps, and logical block diagrams disclosed in embodiments of this application. The general-purpose processor may be a microprocessor or any conventional processor or the like. Steps of the methods disclosed with reference to embodiments of this application may be directly performed and completed by a hardware processor, or may be performed and completed by a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instruction or data structure and that can be accessed by a computer, but is not limited thereto. The memory in this embodiment of this application may alternatively be a circuit or any other apparatus that can implement a storage function, and is configured to store program instructions and/or data.

All or a part of the methods provided in embodiments of this application may be implemented by using software, hardware, firmware, or any combination thereof. When software is used to implement the methods, all or a part of the methods may be implemented in a form of computer program product. The computer program product includes one or more computer instructions. When the computer program instructions are loaded and executed on a computer, all or a part of procedures or functions according to embodiments of this application is generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

A person of ordinary skill in the art may be aware that, units and algorithm steps in examples described with reference to embodiments disclosed in this specification can be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

Units described as separate components may be or may not be physically separate, and components displayed as units may be or may not be physical units, that is, may be located in one place or may be distributed on a plurality of network units. Apart or all of the units may be selected according to an actual requirement to achieve the objectives of the solutions of embodiments.

When the functions are implemented in a form of software functional unit and sold or used as an independent product, the functions may be stored in a computer-readable storage medium. Based on such an understanding, the technical solutions of this application essentially, or a part contributing to a conventional technology, or a part of the technical solutions may be implemented in a form of software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A battery management apparatus, wherein the battery management apparatus comprises a primary-control unit and a primary node;
the primary node is configured to receive first cell status information from a first secondary node, wherein the first cell status information comprises status information of a first cell managed by a first secondary-control board corresponding to the first secondary node or status information of a part or all of cells in a first cell group managed by the first secondary-control board corresponding to the first secondary node; and
the primary-control unit is configured to control the primary node to send control information to the first secondary node, wherein the control information is used by the first secondary-control board to manage the first cell or the first cell group.

2. The battery management apparatus according to claim 1, wherein the primary-control unit is configured to control, based on the first cell status information, the primary node to send the control information to the first secondary node.

3. A battery management apparatus, wherein the battery management apparatus comprises a first secondary-control unit and a first secondary node;
the first secondary-control unit obtains first cell status information, wherein the first cell status information comprises status information of a first cell managed by a first secondary-control board or status information of a part or all of cells in a first cell group managed by the first secondary-control board;
the first secondary-control unit controls the first secondary node to send the first cell status information to a primary node;
the first secondary node receives control information from the primary node; and
the first secondary-control unit is configured to manage the first cell or one or more cells in the first cell group based on the control information.

4. The battery management apparatus according to claim 3, wherein the first cell status information comes from a first sensor and/or a second sensor; and
the first sensor is located inside the first cell or the first cell group, and the second sensor is located outside the first cell or the first cell group.

5. A battery management system, comprising a primary-control board and a first secondary-control board, wherein
the first secondary-control board is configured to: manage a first cell or a first cell group, and send first cell status information to the primary-control board, wherein the first cell status information comprises status information of the first cell or status information of a part or all of cells in the first cell group; and
the primary-control board is configured to send first control information to the first secondary-control board, wherein the first control information is used by the first secondary-control board to manage the first cell or the first cell group.

6. The battery management system according to claim 5, wherein the battery management system further comprises a second secondary-control board; and
the second secondary-control board is configured to: manage a second cell or a second cell group, and send second cell status information to the primary-control board, wherein the second cell status information comprises status information of the second cell or status information of a part or all of cells in the second cell group.

7. The battery management system according to claim 5 or 6, wherein the first cell status information comes from a first sensor and/or a second sensor;
the first sensor is configured to collect internal cell status information of the first cell or the first cell group and report the internal cell status information to the first secondary-control board; and
the second sensor is configured to collect external cell status information of the first cell or the first cell group and report the external cell status information to the first secondary-control board.

8. The battery management system according to claim 7, wherein the internal cell status information comprises one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group; and
the external status information comprises one or more of the following: an external temperature, a voltage, a current, a stress, a gas type, gas pressure, a gas concentration, an electrolyte, smoke sensing, and an internal resistance of the cell or the cell group.

9. The battery management system according to claim 7 or 8, wherein the first secondary-control board is in an electrical connection to the first sensor and/or the second sensor.

10. The battery management system according to any one of claims 5 to 9, wherein the first secondary-control board is in an electrical connection to the first cell or the first cell group.

11. The battery management system according to claim 9 or 10, wherein the electrical connection comprises one or more of the following: a wire harness connection, a flexible printed circuit FPC connection, a printed circuit board PCB connection, a pin PIN connection, an insert connection, a solder connection, and a connector connection.

12. The battery management system according to any one of claims 5 to 11, wherein the battery management system further comprises a balance module located on the first secondary-control board; and
the balance module is configured to: when a balance condition is satisfied, perform a balance operation on at least one cell or cell group managed by the first secondary-control board, wherein
the balance condition comprises one or more of the following:
the balance module receives a balance instruction sent by a secondary-control unit located on the first secondary-control board; the balance module receives a balance instruction from the primary-control board through a secondary node located on the first secondary-control board; and the balance module determines, based on the obtained first cell status information, that a balance operation needs to be performed.

13. The battery management system according to any one of claims 5 to 12, wherein the primary-control board is further configured to send a switch instruction to an electronic switch to control turn-off or turn-on of the electronic switch, and the electronic switch is configured to control a battery system managed by the battery management system; and
the electronic switch comprises one or more of the following: a main positive relay, a main negative relay, a main positive metal-oxide-semiconductor field-effect transistor, and a main negative metal-oxide-semiconductor field-effect transistor.

14. The battery management system according to any one of claims 5 to 13, wherein the first secondary-control board is further configured to report alarm information to the primary-control board by using a first alarm module located on the first secondary-control board, wherein the alarm information indicates that the first cell or one or more cells in the first cell group are abnormal.

15. The battery management system according to any one of claims 5 to 14, wherein the primary-control board is further configured to trigger an alarm by using a second alarm module located on the primary-control board when it is determined that received cell status information or cell status information obtained through processing satisfies an alarm condition.

16. The battery management system according to any one of claims 5 to 15, wherein the primary-control board is further configured to send cell primary-control information to a vehicle control unit, so that the vehicle control unit controls output of battery prompt information based on the cell primary-control information, wherein the battery prompt information indicates a status of the battery system managed by the battery management system.

17. The battery management system according to claim 16, wherein the cell primary-control information comprises first information and/or second information of the battery system managed by the battery management system, and the second information is obtained based on the first information;
the first information comprises one or more pieces of the following information of the battery system:
internal cell status information, external cell status information, module status information, and sensing status information; and
the second information comprises one or more pieces of the following information of the battery system:
a state of charge, a state of health, a state of safety, a battery level indication, power, a highest temperature of a single cell, a lowest temperature of a single cell, a highest voltage of a single cell, a lowest voltage of a single cell, a total current, an insulation status, alarm information, fault information, and an electronic switch status.

18. The battery management system according to claim 17, wherein the battery prompt information is output in one or more of the following manners: sound signal, optical signal, or electrical signal.

19. The battery management system according to claim 17 or 18, wherein the battery prompt information comprises the first information and/or third information, and the third information is obtained based on the first information; and
the third information comprises one or more pieces of information in the second information, and/or one or more pieces of the following information of the battery system:
dynamic energy consumption, estimated remaining drivable range, estimated remaining drivable time, and estimated remaining charging time.

20. The battery management system according to any one of claims 16 to 19, wherein the primary-control board is further configured to send the cell primary-control information to a cloud server, and receive a battery control strategy from the cloud server.

21. The battery management system according to any one of claims 6 to 20, wherein the primary-control board communicates with the first secondary-control board and the second secondary-control board in a wireless manner.

22. The battery management system according to any one of claims 13 to 21, wherein the primary-control board communicates with the electronic switch in a wireless or wired manner.

23. The battery management system according to claim 21 or 22, wherein the wireless communication manner comprises one or more of the following: Bluetooth communication, ZigBee, wireless fidelity, infrared, radio frequency, near field communication, an ultra-wideband technology, a wireless local area network, a 60 GHz wireless communication technology, a visible light communication technology, and an ad hoc network technology.

24. A server apparatus, wherein the server apparatus comprises a communication unit and a processing unit;
the communication unit is configured to receive a plurality of pieces of cell primary-control information from a plurality of terminals, wherein the cell primary-control information corresponds to a plurality of cells or a plurality of cell groups of the terminal;
the processing unit is configured to generate a battery control strategy based on one or more of the plurality of pieces of cell primary-control information; and
the communication unit is configured to send the battery control strategy to a first terminal in the plurality of terminals.

25. A control device, wherein the control device comprises a communication unit and a processing unit;
the communication unit is configured to receive a battery control strategy sent by a server apparatus; and
the processing unit is configured to complete a strategy update according to the battery control strategy.

26. The control device according to claim 25, wherein the control device comprises one or more of the following: a secondary-control board, a primary-control board, or a relay device; and
the relay device comprises one or more of the following: a vehicle control unit, a wireless gateway, a wireless access network device, and a roadside unit.

27. A battery management method, wherein the method comprises:
receiving, by a primary-control board, first cell status information from a first secondary-control board, wherein the first cell status information comprises status information of a first cell managed by the first secondary-control board or status information of a part or all of cells in a first cell group managed by the first secondary-control board; and
sending, by the primary-control board, control information to the first secondary-control board based on the first cell status information, wherein the control information is used by the first secondary-control board to manage the first cell or the first cell group.

28. The method according to claim 27, wherein the first cell status information comprises one or more of the following: internal cell status information of the first cell or the first cell group collected by using a first sensor and external cell status information of the first cell or the first cell group collected by using a second sensor.

29. The method according to claim 28, wherein the internal cell status information comprises one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group; and
the external cell status information comprises one or more of the following: an external temperature, a voltage, a current, a stress, a gas type, gas pressure, a gas concentration, an electrolyte, smoke sensing, and an internal resistance of the cell or the cell group.

30. The method according to any one of claims 27 to 29, wherein the method further comprises:
sending, by the primary-control board, a switch instruction to an electronic switch to control turn-off or turn-on of the electronic switch, wherein the electronic switch is configured to control disconnection or connection of a high-voltage circuit in a battery system managed by the battery management system, wherein
the electronic switch comprises one or more of the following: a main positive relay, a main negative relay, a main positive metal-oxide-semiconductor field-effect transistor, and a main negative metal-oxide-semiconductor field-effect transistor.

31. The method according to any one of claims 27 to 30, wherein the method further comprises:
receiving, by the primary-control board, alarm information sent by the first secondary-control board, wherein the alarm information indicates that the first cell or one or more cells in the first cell group are abnormal; and
sending, by the primary-control board, the control information to the first secondary-control board based on the alarm information.

32. The method according to any one of claims 27 to 31, wherein the method further comprises:
triggering, by the primary-control board, an alarm when it is determined that received cell status information or cell status information obtained through processing satisfies an alarm condition, wherein
the alarm condition indicates that one or more pieces of cell status information received by the primary-control board or obtained by the primary-control board through processing are greater than or less than a specified threshold corresponding to the cell status information.

33. The method according to any one of claims 27 to 32, wherein the method further comprises:
determining, by the primary-control board, cell primary-control information based on the received cell status information; and
sending, by the primary-control board, the cell primary-control information to a vehicle control unit, so that the vehicle control unit controls output of battery prompt information based on the cell primary-control information, wherein the battery prompt information indicates a status of the battery system managed by the battery management system.

34. A battery management method, wherein the method comprises:
obtaining, by a first secondary-control board, first cell status information, wherein the first cell status information comprises status information of a first cell managed by the first secondary-control board or status information of a part or all of cells in a first cell group managed by the first secondary-control board;
controlling, by the first secondary-control board, the first secondary node to send the first cell status information to a first primary node;
receiving, by the first secondary node, control information from the first primary node; and
managing, by the first secondary-control board, the first cell or one or more cells in the first cell group based on the control information.

35. The method according to claim 34, wherein the first cell status information comprises one or more of the following: internal cell status information of the first cell or the first cell group collected by using a first sensor and external cell status information of the first cell or the first cell group collected by using a second sensor.

36. The method according to claim 35, wherein the internal cell status information comprises one or more of the following: an internal temperature, an internal gas type, gas pressure, a gas concentration, a voltage, a current, a potential of a cell positive electrode plate, a potential of a cell negative electrode plate, an electrolyte, an internal resistance, and a stress of the cell or the cell group; and
the external cell status information comprises one or more of the following: an external temperature, a voltage, a current, a stress, a gas type, gas pressure, a gas concentration, an electrolyte, smoke sensing, and an internal resistance of the cell or the cell group.

37. The method according to claim 35, wherein the method further comprises:
reporting, by the first secondary-control board, alarm information to the primary-control board when it is determined that received cell status information or cell status information obtained through processing satisfies an alarm condition, wherein
the alarm information indicates that the first cell or one or more cells in the first cell group are abnormal.

38. A terminal device, comprising program instructions, wherein when the program instructions are run on a computer, the computer is enabled to perform the method according to any one of claims 27 to 33 or the method according to any one of claims 34 to 37.
